# EUROPEAN PATENT APPLICATION

(11) **EP 4 664 234 A1**
(43) Date of publication of application: **17.12.2025**
(21) Application number: 24771122.9
(22) Date of filing: 08.03.2024
(51) Int. Cl.: G06F 1/16

(54) **ELECTRONIC DEVICE COMPRISING HINGE APPARATUS**

(30) Priority: 14.03.2023 KR 20230033538; 05.04.2023 KR 20230044843
(71) Applicant: Samsung Electronics Co., Ltd., Suwon-si, Gyeonggi-do 16677 (KR)
(72) Inventor: AN, Yonghee, Suwon-si, Gyeonggi-do 16677 (KR); KIM, Seunghun, Suwon-si, Gyeonggi-do 16677 (KR); KIM, Jeongseob, Suwon-si, Gyeonggi-do 16677 (KR); SEO, Pilwon, Suwon-si, Gyeonggi-do 16677 (KR); LEE, Seokwoo, Suwon-si, Gyeonggi-do 16677 (KR); HAN, Junhee, Suwon-si, Gyeonggi-do 16677 (KR)
(74) Representative: Gulde & Partner
(86) International application number: PCT/KR2024/002988
(87) International publication number: WO 2024/191122

(57) **Abstract**

An electronic device according to one embodiment of the present disclosure comprises: a first housing; a second housing; a hinge apparatus which connects the first housing and the second housing in a foldable manner and includes a plurality of gears that mesh with each other and rotate; a driving apparatus which rotates one of the plurality of gears; a display disposed on the front of the electronic device and in which a partial area is deformed by the rotation of the second housing relative to the first housing; a first magnetic member disposed in the first housing; a second magnetic member disposed in the second housing so as to face the first magnetic member when the electronic device is folded; a first pressure sensor disposed between the display and the first magnetic member; and a processor electrically connected to the first pressure sensor and the driving apparatus, wherein the first magnetic member presses the first pressure sensor through an attractive force acting on the second magnetic member according to the folding motion of the first housing and the second housing, the first pressure sensor generates a pressure signal on the basis of pressure by means of the first magnetic member, and the processor can control the driving apparatus on the basis of the pressure signal.

## Description

### [Technical Field]

Various embodiments disclosed herein relate to an electronic device including a hinge device.

### [Background Art]

Hinge structures are widely used across overall industry as structures for rotatably connecting mechanical components. For example, a hinge structure may be applied to a foldable electronic device.

With the technological development of components included in electronic devices, various types of electronic devices are being developed. In particular, as foldable displays have been developed with the technological development of displays that visually display information, new-concept electronic devices are emerging.

For example, a foldable electronic device may be implemented by applying a foldable display. As electronic devices having such a new form factor appear, demand for technology development for components that rotatably connect housings of electronic devices are also increasing.

### [Disclosure of Invention]

### [Technical Problem]

In order to improve the usability of a foldable electronic device, a stop operation and a free stop operation may be required. The stop operation may refer to an operation in which the electronic device is maintained in the fully folded state or the fully unfolded state. The free stop operation may refer to an operation in which the electronic device maintains its state when no external force equal to or greater than a predetermined level is applied while the electronic device transitions from the folded state to the unfolded state.

In the stop operation of the foldable electronic device, the electronic device may maintain the folded state when a force is applied in the folding direction while it is completely folded, and may maintain the unfolded state when a force is applied in the unfolding direction while it is completely unfolded. However, as the size of the electronic device increases and the thickness of the electronic device decreases, there may be limitations in maintaining the free stop operation or stop operation of the foldable electronic device through the hinge device. Accordingly, inconvenience may be caused in using the foldable electronic device. For example, as the size of the foldable electronic device increases, resulting in an increase in weight, a user may need to exert a greater force to open or close the foldable electronic device. When the foldable electronic device transitions from a closed state to an unfolded state, the weight of the housing may cause the electronic device to be unfolded at once without the free stop operation, which may result in damage to the hinge device. In addition, when the foldable electronic device transitions from an unfolded state to a closed state, the electronic device may be closed at once without the free stop operation, which may cause a user's hand to get caught or result in damage to the display.

### [Solution to Problem]

According to an embodiment of the disclosure, an electronic device may include a first housing, a second housing, a hinge device configured to foldably connect the first housing and the second housing, the hinge device including a plurality of gears configured to rotate in engagement with each other, a driving device configured to rotate one gear among the plurality of gears, a display disposed on the front surface of the electronic device and having a partial area of the display deformed by rotation of the second housing relative to the first housing, a first magnetic member disposed in the first housing, a second magnetic member disposed in the second housing to face the first magnetic member when the electronic device is in a folded state, a first pressure sensor disposed between the display and the first magnetic member, and a processor electrically connected to the first pressure sensor and the driving device. The first magnetic member may be configured to press the first pressure sensor by an attractive force acting between the first magnetic member and the second magnetic member in response to a folding operation of the first housing and the second housing. The first pressure sensor may be configured to generate a pressure signal based on the pressing by the first magnetic member. The processor may be configured to control the driving device based on the pressure signal.

According to an embodiment of the disclosure, an electronic device may include a first housing, a second housing, a hinge device configured to foldably connect the first housing and the second housing, the hinge device including a plurality of gears configured to rotate in engagement with each other, a driving device configured to rotate one gear among the plurality of gears, a magnet disposed in the hinge device, a Hall sensor disposed in one of the first housing and the second housing, the hall sensor facing the magnet when the electronic device is in an unfolded state, and a processor electrically connected to the Hall sensor and the driving device. The processor may be configured to detect a magnetic field value of the magnet through the Hall sensor, and control the driving device based on the detected magnetic field value.

### [Advantageous Effects of Invention]

In an embodiment disclosed herein, a driving device such as a motor may be connected to a hinge device so as to allow the foldable electronic device to be opened and closed in a relatively simple manner. In addition, a sensor disposed in the foldable electronic device may be used to identify a user's action to open or close the foldable electronic device. When an opening or closing operation of the foldable electronic device is identified through the sensor, the driving device may control the folding operation of the foldable electronic device. Accordingly, the driving device may assist in opening and closing the foldable electronic device. For example, as the foldable electronic device transitions from a closed state to an unfolded state through the driving device, the device may be prevented from being unfolded at once without a free stop operation, thereby preventing damage to the hinge device. In addition, as the foldable electronic device transitions from the unfolded state to the closed state through the driving device, the device may be prevented from being closed at once without a free stop operation.

### [Brief Description of Drawings]

In connection with the description of the drawings, the same or similar components may be denoted by the same or similar reference numerals.
FIG. 1 is a block diagram of an electronic device according to an embodiment in a network environment.
FIGS. 2A and 2B are a front view and a rear view of an electronic device according to an embodiment of the disclosure in an unfolded state.
FIGS. 3A and 3B are a front view and a rear view of the electronic device according to an embodiment of the disclosure in a folded state.
FIG. 4 is an exploded perspective view of an electronic device according to an embodiment of the disclosure.
FIG. 5A is a view illustrating a positional relationship between magnetic members and pressure members of the electronic device when the electronic device transitions from an unfolded state to a folded state according to an embodiment of the disclosure.
FIG. 5B is a view illustrating various arrangement relationships between the pressure sensors and the magnetic members in the first housing and the second housing according to an embodiment of the disclosure.
FIGS. 6A and 6B are views illustrating control using a pressure sensor, an angle sensor, and a motor when the electronic device transitions from the unfolded state to the folded state according to an embodiment of the disclosure.
FIG. 6C is a view illustrating sensing by the pressure sensor via a magnetic member when the electronic device transitions from the unfolded state to the folded state according to an embodiment of the disclosure.
FIGS. 7A and 7B are views illustrating control using a pressure sensor, an angle sensor, and a motor when the electronic device transitions from the folded state to an unfolded state according to the embodiment of the disclosure.
FIG. 7C is a view illustrating sensing by the pressure sensor via a magnetic member when the electronic device transitions from the folded state to the unfolded state according to an embodiment of the disclosure.
FIG. 8 is a view illustrating a positional relationship between a Hall sensor and magnets arranged in the electronic device according to an embodiment of the disclosure.
FIGS. 9A and 9B are views illustrating control using the Hall sensor and the angle sensor when the electronic device transitions from the unfolded state to the folded state according to an embodiment of the disclosure.
FIGS. 10A and 10B are views illustrating control using the Hall sensor and the angle sensor when the electronic device transitions from the folded state to the unfolded state according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

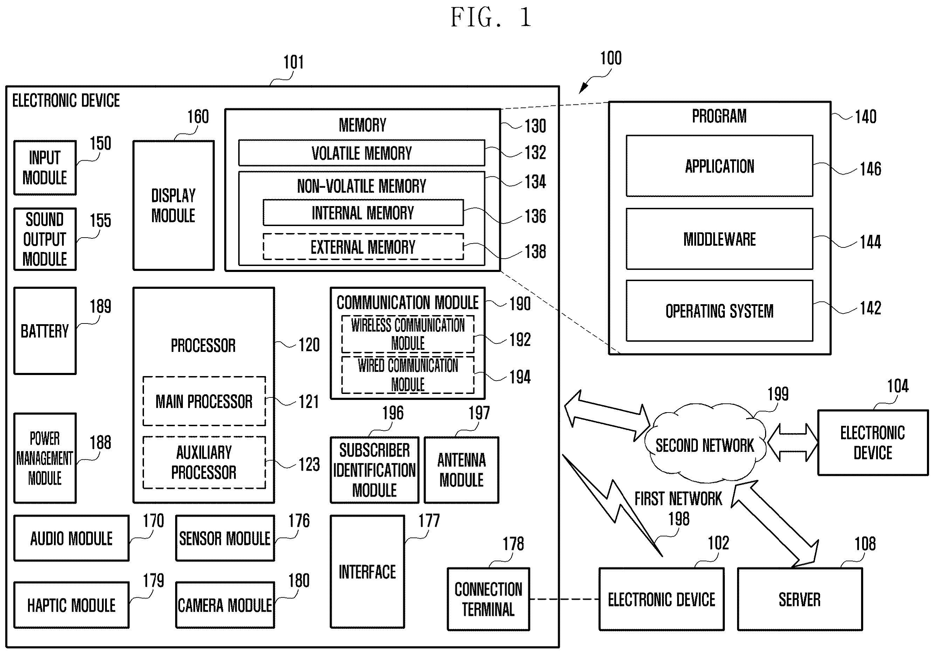

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

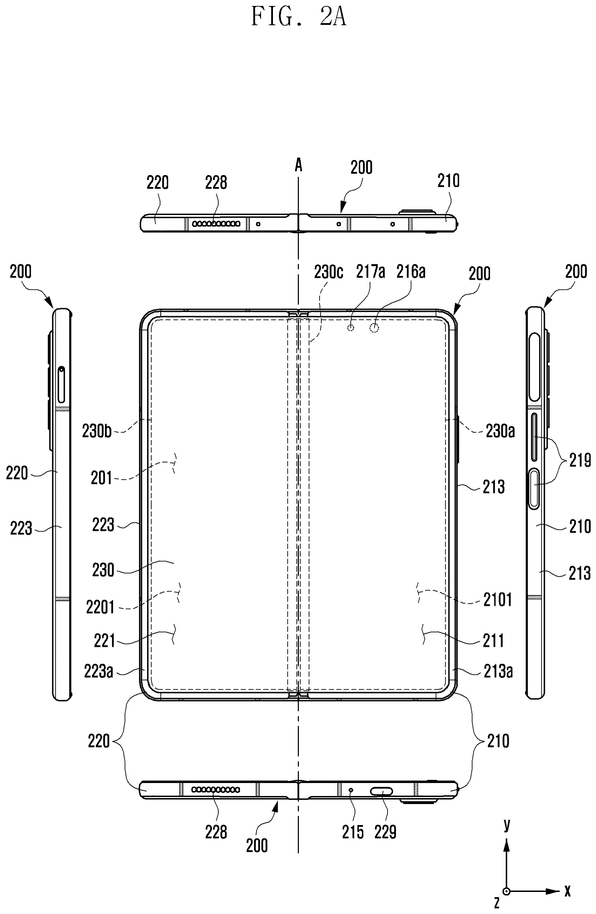

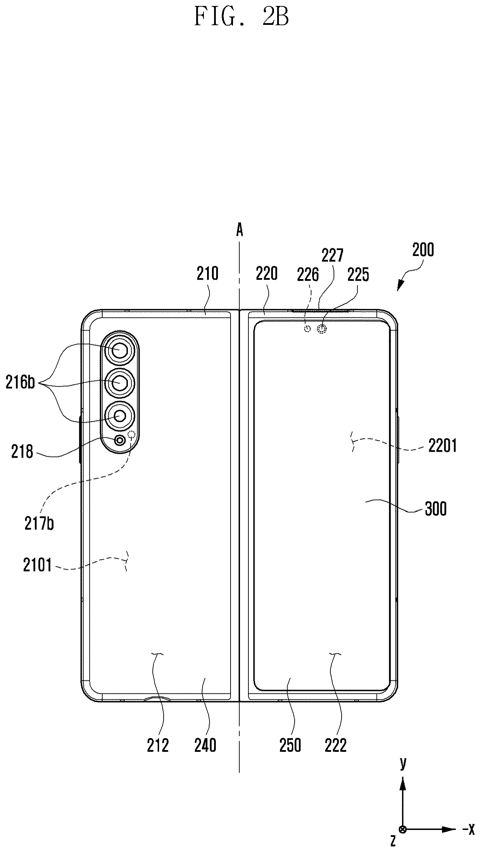

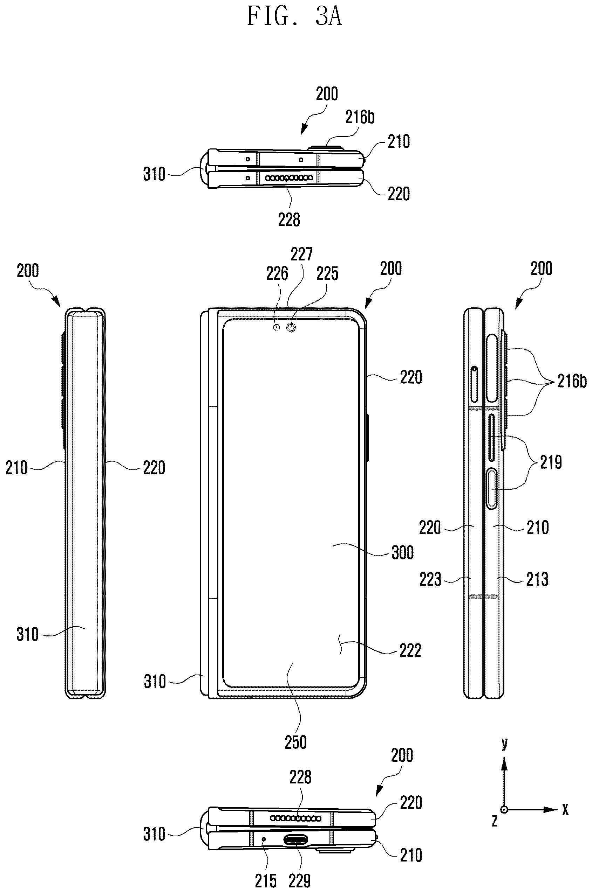

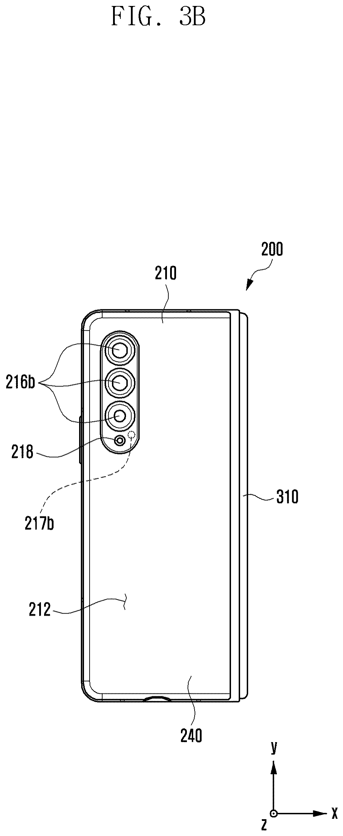

FIGS. 2A and 2B are a front view and a rear view of an electronic device according to an embodiment of the disclosure in an unfolded state. FIGS. 3A and 3B are a front view and a rear view of the electronic device according to an embodiment of the disclosure in a folded state.

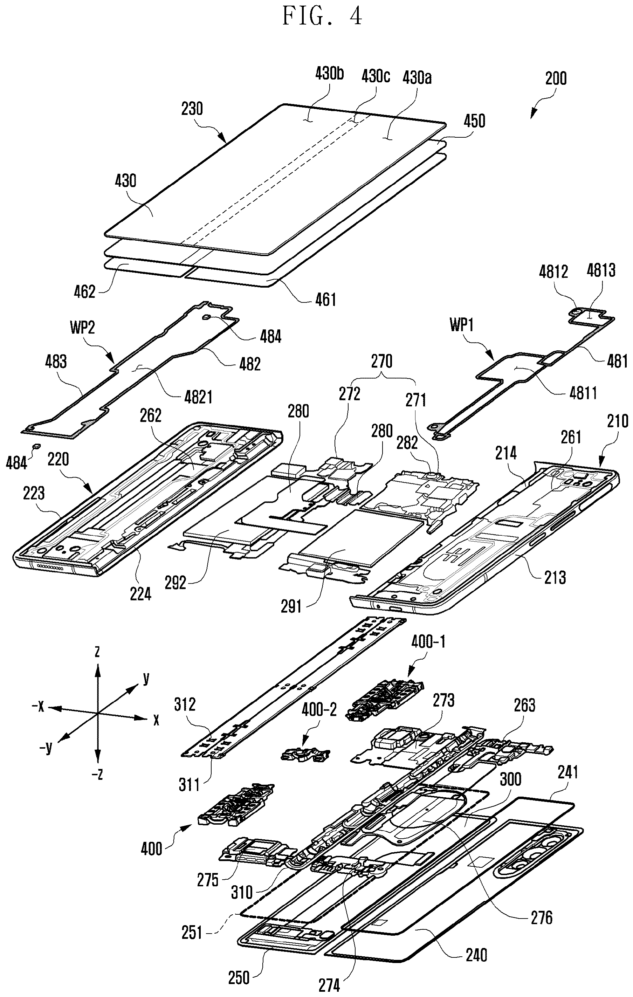

Referring to FIGS. 2A to 3B, an electronic device 200 may include a pair of housings 210 and 220 (e.g., a foldable housing structure) rotatably coupled to each other about a folding axis A via a hinge device (e.g., the hinge devices 400 and 400-1 in FIG. 4, or a hinge module) so as to be foldable relative to each other, a first display 230 (e.g., a flexible display, a foldable display, or a main display) disposed across the pair of housings 210 and 220, and/or a second display 300 (e.g., a sub-display) disposed on the second housing 220. According to an embodiment, at least a portion of the hinge device (e.g., the hinge devices 400 and 400-1 in FIG. 4) may be disposed to be invisible from the outside through the first housing 210 and the second housing 220, and may be disposed to be invisible from the outside through a hinge housing 310, which covers a foldable portion, in the unfolded state. Herein, the surface on which the first display 230 is disposed may be defined as the front surface of the electronic device 200, and the surface opposite to the front surface may be defined as the rear surface of the electronic device 200. In addition, the surface surrounding the space between the front surface and the rear surface may be defined as the side surface of the electronic device 200.

According to an embodiment, the pair of housings 210 and 220 may include a first housing 210 and a second housing 220 that are disposed to be foldable with respect to each other via the hinge device (e.g., the hinge devices 400 and 400-1 in FIG. 4). According to an embodiment, the pair of housings 210 and 220 are not limited to the shape and assembly illustrated in FIGS. 2A to 3B, but may be implemented by other shapes or other combinations and/or assemblies of components. According to an embodiment, the first housing 210 and the second housing 220 may be disposed on opposite sides of a folding axis A and may have shapes that are generally symmetrical to each other with respect to the folding axis A. According to some embodiments, the first housing 210 and the second housing 220 may be folded asymmetrically with respect to the folding axis A. According to an embodiment, the first housing 210 and the second housing 220 may form an angle or have a distance therebetween, which may be variable depending on whether the electronic device 200 is in the unfolded state, in the folded state, or in the intermediate state.

According to an embodiment, in the unfolded state of the electronic device 200, the first housing 210 may include a first surface 211 connected to the hinge device (e.g., the hinges 400 and 400-1 in FIG. 4) and arranged to face the front side of the electronic device 200, a second surface 212 facing away from the first surface 211, and/or a first side surface member 213 surrounding at least a portion of a first space between the first surface 211 and the second surface 212. According to an embodiment, in the unfolded state of the electronic device 200, the second housing 220 may include a third surface 221 connected to the hinge device (e.g., the hinge devices 400 and 400-1 in FIG. 4) and arranged to face the front side of the electronic device 200, a fourth surface 222 facing away from the third surface 221, and/or a second side surface member 223 surrounding at least a portion of a second space between the third surface 221 and the fourth surface 222. According to an embodiment, the first surface 211 may be oriented in substantially the same direction as the third surface 221 in the unfolded state and may at least partially face the third surface 221 in the folded state. According to an embodiment, the electronic device 200 may include a recess 201 provided to accommodate the first display 230 through structural coupling between the first housing 210 and the second housing 220. According to an embodiment, the recess 201 may have substantially the same size as the first display 230.

According to an embodiment, the hinge housing 310 (e.g., a hinge cover) may be disposed between the first housing 210 and the second housing 220 and disposed to cover a portion (e.g., at least one hinge module) of the hinge device (e.g., the hinge devices 400 and 400-1 in FIG. 4) disposed in the hinge housing 310. According to an embodiment, the hinge housing 310 may be covered by a portion of the first housing 210 and the second housing 220 or exposed to the outside, depending on whether the electronic device 200 is in the unfolded state, the folded state, or the intermediate state. For example, when the electronic device 200 is in the unfolded state, at least a portion of the hinge housing 310 may not be substantially exposed by being disposed to be covered by the first housing 210 and the second housing 220. According to an embodiment, when the electronic device 200 is in the folded state, at least a portion of the hinge housing 310 may be exposed to the outside between the first housing 210 and the second housing 220. According to an embodiment, when the electronic device is in the intermediate state in which the first housing 210 and the second housing 220 are folded with a certain angle, the hinge housing 310 may be disposed between the first housing 210 and the second housing 220 to be at least partially exposed to the outside of the electronic device 200. For example, the area of the hinge housing 310 exposed to the outside may be smaller than that in the case where the electronic device is fully folded. According to an embodiment, the hinge housing 310 may include a curved surface.

According to an embodiment, when the electronic device 200 is in the unfolded state (e.g., the state in FIGS. 2A and 2B), the first housing 210 and the second housing 220 form an angle of about 180 degrees therebetween, and the first area 230a, the second area 230b, and the folding area 230c of the first display 230 may be arranged to be oriented in substantially the same direction (e.g., the z-axis direction) while forming the same plane. As another embodiment, when the electronic device 200 is in the unfolded state, the first housing 210 may rotate by an angle of about 360 degrees with respect to the second housing 220 to be folded in the opposite direction such that the second surface 212 and the fourth surface 222 face each other (out-folding type).

According to an embodiment, when the electronic device 200 is in the folded state (e.g., the state in FIGS. 3A and 3B), the first surface 211 of the first housing 210 and the third surface 221 of the second housing 220 may be disposed to face each other. In this case, the first area 230a and the second area 230b of the first display 230 may form a narrow angle (e.g., in the range of 0 degrees to about 10 degrees) with respect to each other via the folding area 230c, and may be disposed to face each other. According to an embodiment, at least a portion of the folding area 230c may be transformed into a curved shape with a predetermined curvature. According to an embodiment, when the electronic device 200 is in the intermediate state, the first housing 210 and the second housing 220 may be disposed to form a certain angle therebetween. In this case, the first area 230a and the second area 230b of the first display 230 may form an angle that is greater than that in the folded state and smaller than that in the unfolded state, and the curvature of the folding area 230c may be smaller than that in the folded state and greater than that in the unfolded state. In some embodiments, the first housing 210 and the second housing 220 may form an angle at which the first housing 210 and the second housing 220 can be stopped to form a predetermined folding angle between the folded state and the unfolded state via the hinge device (e.g., the hinge devices 400 and 400-1 in FIG. 4) (free stop function). In some embodiments, the first housing 210 and the second housing 220 may be continuously operated while being pressed in the unfolding direction and the folding direction with reference to a predetermined inflection angle via the hinge device (e.g., the hinge devices 400 and 400-1 in FIG. 4).

According to an embodiment, the electronic device 200 may include at least one of the following components: one or more displays 230 and 300, input devices 215, sound output devices 227 and 228, sensor modules 217a, 217b, and 226, camera modules 216a, 216b, and 225, key input devices 219, indicators (not illustrated), or a connector port 229 provided on or in the first housing 210 and/or the second housing 220. In some embodiments, the electronic device 200 may not include at least one of the components, or additionally include at least one other component.

According to an embodiment, the one or more displays 230 and 300 may include a first display 230 (e.g., a display module 230) arranged to be supported by the first surface 211 of the first housing 210 to the third surface 221 of the second housing 220 across the hinge device (e.g., the hinge devices 400 and 400-1 in FIG. 4), and a second display 300 disposed in the inner space of the second housing 220 to be at least partially visible from the outside through the fourth surface 222. In some embodiments, the second display 300 may be disposed in the inner space of the first housing 210 to be visible from the outside through the second surface 212. According to an embodiment, the first display 230 may be mainly used when the electronic device 200 is in the unfolded state, and the second display 300 may be mainly used when the electronic device 200 is in the folded state. According to an embodiment, when the electronic device 200 is in the intermediate state, the electronic device 200 may be controlled such that the first display 230 and/or the second display 300 can be used based on the folding angle between the first housing 210 and the second housing 220.

According to an embodiment, the first display 230 may be placed in an accommodation space defined by the pair of housings 210 and 220. For example, the first display 230 may be disposed in the recess 201 defined by the pair of housings 210 and 220, and may be disposed to occupy substantially most of the front surface of the electronic device 200 in the unfolded state. According to an embodiment, the first display 230 may include a display module 230, at least a portion of which is transformable into a flat shape or a curved shape. According to an embodiment, the first display 230 may include a first area 230a facing the first housing 210, a second area 230b facing the second housing 220, and a folding area 230c interconnecting the first area 230a and the second area 230b and facing the hinge device (e.g., the hinge devices 400 and 400-1 in FIG. 4). In an embodiment, the area division of the first display 230 is only an exemplary physical division by the pair of housings 210 and 220 and the hinge device (e.g., the hinge devices 400 and 400-1 in FIG. 4), and the first display 230 may display a seamless single entire screen substantially with the pair of housings 210 and 220 and the hinge device (e.g., the hinge devices 400 and 400-1 in FIG. 4). According to an embodiment, the first area 230a and the second area 230b may have an overall symmetrical shape or a partially asymmetrical shape with respect to the folding area 230c.

According to an embodiment, the electronic device 200 may include a first rear surface cover 240 disposed on the second surface 212 of the first housing 210 and a second rear surface cover 250 disposed on the fourth surface 222 of the second housing 220. In some embodiments, at least a portion of the first rear surface cover 240 may be formed integrally with the first side surface member 213. In some embodiments, at least a portion of the second rear surface cover 250 may be integrated with the second side surface member 223. According to an embodiment, at least one of the first rear surface cover 240 and the second rear surface cover 250 may be made of a substantially transparent plate (e.g., a glass plate including various coating layers, or a polymer plate) or an opaque plate. According to an embodiment, the first rear surface cover 240 may be made of, for example, coated or colored glass, ceramic, polymer, metal (e.g., aluminum, stainless steel (STS), or magnesium), or an opaque plate such as a combination of two or more of these materials. According to an embodiment, the second rear surface cover 250 may be made of a substantially transparent plate of, for example, glass or polymer. Accordingly, the second display 300 may be disposed in the inner space of the second housing 220 to be visible from the outside through the second rear surface cover 250.

According to an embodiment, the input devices 215 may include a microphone. In some embodiments, the input devices 215 may include a plurality of microphones disposed to detect the direction of sound. According to an embodiment, the sound output devices 227 and 228 may include speakers. In an embodiment, the sound output devices 227 and 228 may include a call receiver 227 disposed through the fourth surface 222 of the second housing 220, and an external speaker 228 disposed through at least a portion of the second side surface member 223 of the second housing 220. In some embodiments, the input devices 215, the sound output devices 227 and 228, and the connector port 229 may be disposed in the spaces of the first housing 210 and/or the second housing 220, and may be exposed to the external environment through one or more holes provided in the first housing 210 and/or the second housing 220. In some embodiments, the holes provided in the first housing 210 and/or the second housing 220 may be commonly used for the input device 215 and the sound output devices 227 and 228. In some embodiments, the sound output devices 227 and 228 may include a speaker that operates without holes provided in the first housing 210 and/or the second housing 220 (e.g., a piezo speaker).

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. In an embodiment, the electronic device 200 may include a flash 218 located near the second camera module 216b. According to an embodiment, the flash 218 may include, for example, a light-emitting diode or a xenon lamp. According to an embodiment, the camera modules 216a, 216b, and 225 may include one or more lenses, an image sensor, and/or an image signal processor. In some embodiments, at least one of the camera modules 216a, 216b, and 225 may include two or more lenses (e.g., wide-angle and telephoto lenses) and image sensors, and the camera modules may be disposed together on one surface of the first housing 210 and/or the second housing 220.

According to an embodiment, the sensor modules 217a, 217b, and 226 may generate electrical signals or data values corresponding to an internal operating state or an external environmental state of the electronic device 200. According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor modules 217a, 217b, and 226 may include at least one of a gesture sensor, a grip sensor, a color sensor, an infrared (IR) sensor, an illumination sensor, an ultrasonic sensor, an iris recognition sensor, or a distance detection sensor (e.g., a time-of-flight (TOF) sensor or a light detection and ranging (LiDAR)).

According to an embodiment, the electronic device 200 may further include at least one of sensor modules (not illustrated), for example, an air pressure sensor, a magnetic sensor, a biometric sensor, a temperature sensor, a humidity sensor, or a fingerprint recognition sensor. In some embodiments, the fingerprint recognition sensor may be disposed through at least one of the first side surface member 213 of the first housing 210 and/or the second side surface member 223 of the second housing 220.

According to an embodiment, the key input devices 219 may be disposed to be exposed outside through the first side surface member 213 of the first housing 210. In some embodiments, the key input devices 219 may be disposed to be exposed outside through the second side surface member 223 of the second housing 220. In some embodiments, the electronic device 200 may not include some or all of the above-mentioned key input devices 219, and a key input device 219, which is not included, may be implemented in another form, such as a soft key, on at least one display 230 or 300. As another embodiment, the key input devices 219 may be implemented using pressure sensors included in at least one display 230 or 300.

According to an embodiment, the connector port 229 may include a connector (e.g., a USB connector or an interface connector port module (IF module)) configured to transmit/receive power and/or data to/from an external electronic device. In some embodiments, the connector port 229 may further include a separate connector port (e.g., an ear jack hole) for performing a function to transmit/receive an audio signal together with an external electronic device or for performing a function to transmit/receive an audio signal.

According to an embodiment, one or more camera modules 216a and 225 among the camera modules 216a, 216b, and 225, one or more sensor modules 217a and 226 among the sensor modules 217a, 217b, and 226, and /or an indicator may be disposed to be exposed through one or more displays 230 and 300. For example, the at least one camera module 216a or 225, the at least one sensor module 217a or 226, and/or the indicator may be disposed in the inner space of the at least one housing 210 or 300 below the active area (display area) of the at least one display 230 or 300, and may be disposed to come into contact with the external environment through an opening perforated up to the cover member (e.g., a window layer (not illustrated) of the first display 230 and/or the second rear surface cover 250) or a transparent area. According to an embodiment, an area in which the at least one display 230 or 300 and the at least one camera module 216a or 225 face each other may be provided as a transmission area with a predetermined transmittance as a portion of a content display area. According to an embodiment, the transmission area may have a transmittance ranging from about 5% to about 20%. The transmissive area may include an area overlapping the effective area (e.g., a view angle area) of the at least one camera module 216a or 225 through which light imaged by an image sensor to generate an image passes. For example, the transmissive area of the display 230 or 300 may include an area having a lower pixel density than the periphery. For example, the transmissive area may replace an opening. For example, the at least one camera module 216a or 225 may include an under-display camera (UDC) or an under-panel camera (UPC). As another embodiment, some camera modules or sensor modules 217a and 226 may be arranged to perform the functions thereof without being visually exposed through a display. For example, the areas facing the camera modules 216a and 225 and/or the sensor modules 217a and 226 disposed under the displays 230 and 300 (e.g., a display panel) may have an under-display camera (UDC) structure, and may not require a perforated opening.

FIG. 4 is an exploded perspective view of the electronic device 200 according to various embodiments of the disclosure.

Referring to FIG. 4, the electronic device 200 may include a first display 230 (e.g., a display module 230), a second display 300, hinge devices 400 and 400-1, a pair of support members 261 and 262, at least one substrate 270 (e.g., a printed circuit board (PCB)), a first housing 210, a second housing 220, a first rear surface cover 240, and/or a second rear surface cover 250.

According to an embodiment, the first display 230 may include a display panel 430 (e.g., a flexible display panel), a support plate 450 disposed below the display panel 430, and a pair of reinforcement plates 461 and 462 disposed below the support plate 450. According to an embodiment, the display panel 430 may include a first panel area 430a corresponding to a first area (e.g., the first area 230a in FIG. 2A) of the first display 230, a second panel area 430b extending from the first panel area 430a and corresponding to a second area (e.g., the second area 230b in FIG. 2A) of the first display 230, and a third panel area 430c interconnecting the first panel area 430a and the second panel area 430b and corresponding to a folding area (e.g., the folding area 230c in FIG. 2A) of the first display 230. According to an embodiment, the support plate 450 may be disposed between the display panel 430 and a pair of support members 261 and 262 and may be configured to have a material and a shape to provide a flat support structure for the first panel area 430a and the second panel area 430b and a bendable structure for supporting bendability of the third panel area 430c. According to an embodiment, the support plate 450 may be made of a conductive material (e.g., metal) or a non-conductive material (e.g., polymer or fiber reinforced plastics (FRP)). According to an embodiment, the pair of reinforcement plates 461 and 462 may include, between the support plate 450 and the pair of support members 261 and 262, a first reinforcement plate 461 disposed corresponding to at least a portion of the first panel area 430a and the third panel area 430c, and a second reinforcement plate 462 disposed corresponding to at least a portion of the second panel area 430b and the third panel area 430c. According to an embodiment, the pair of reinforcement plates 461 and 462 may be made of a metal material (e.g., SUS) to help reinforce the ground connection structure and rigidity for the first display 230.

According to an embodiment, the second display 300 may be disposed in the space between the second housing 220 and the second rear surface cover 250. According to an embodiment, the second display 300 may be disposed in the space between the second housing 220 and the second rear surface cover 250 to be visible from the outside through substantially the entire area of the second rear surface cover 250.

According to an embodiment, at least a portion of the first support member 261 may be coupled to the second support member 262 to be foldable via the hinge device 400 and 400-1. According to an embodiment, the electronic device 200 may include at least one wiring member 280 (e.g., a flexible printed circuit board (FPCB)) extending from at least a portion of the first support member 261 to a portion of the second support member 262 across the hinge devices 400 and 400-1. According to an embodiment, the first support member 261 may extend from the first side surface member 213 or may be disposed in a manner of being structurally coupled with the first side surface member 213. According to an embodiment, the electronic device 200 may include a first space (e.g., the first space 2101 in FIG. 2A) provided by the first support member 261 and the first rear surface cover 240. According to an embodiment, the first housing 210 (e.g., the first housing structure) may be configured through the coupling of the first side surface member 213, the first support member 261, and the first rear surface cover 240. According to an embodiment, the second support member 262 may extend from the second side surface member 223 or may be disposed in a manner of being structurally coupled with the second side surface member 223. According to an embodiment, the electronic device 200 may include a second space (e.g., the second space 2201 in FIG. 2A) provided by the second support member 262 and the second rear surface cover 250. According to an embodiment, the second housing 220 (e.g., the second housing structure) may be configured through the coupling of the second side surface member 223, the second support member 262, and the second rear surface cover 250. According to an embodiment, at least a portion of the at least one wiring member 280 and/or the hinge devices 400 and 400-1 may be disposed to be supported by at least a portion of the pair of support members 261 and 262. According to an embodiment, the at least one wiring member 280 may be arranged in a direction across the first support member 261 and the second support member 262 (e.g., in the x-axis direction). According to an embodiment, the at least one wiring member 280 may be arranged in a direction (e.g., the x-axis direction) substantially perpendicular to the folding axis (e.g., the y-axis or the folding axis A1 in FIG. 2A).

According to an embodiment, the one or more substrates 270 may include a first substrate 271 disposed in the first space 2101 and a second substrate 272 disposed in the second space 2201. According to an embodiment, the first substrate 271 and the second substrate 272 may include a plurality of electronic components disposed thereon to implement various functions of the electronic device 200. According to an embodiment, the first substrate 271 and the second substrate 272 may be electrically connected to each other via at least one wiring member 280. In an embodiment, a camera module 282 may be disposed on the first substrate 271.

According to an embodiment, the electronic device 200 may include one or more batteries 291 and 292. According to an embodiment, the at least one battery 291 or 292 may include a first battery 291 disposed in the first space 2101 of the first housing 210 and electrically connected to the first substrate 271 and a second battery disposed in the second space 2201 of the second housing 220 and electrically connected to the second substrate 272. According to an embodiment, the first support member 261 and the second support member 262 may further include one or more swelling holes for the first battery 291 and the second battery 292.

According to an embodiment, the first housing 210 may include a first rotation support surface 214, and the second housing 220 may include a second rotation support surface 224 corresponding to the first rotation support surface 214. According to an embodiment, the first rotation support surface 214 and the second rotation support surface 224 may each include a curved surface corresponding to (naturally connected to) the curved outer surface of the hinge housing 310. According to an embodiment, when the electronic device 200 is in the unfolded state, the first rotation support surface 214 and the second rotation support surface 224 may cover the hinge housing 310 to prevent the hinge housing 310 from being exposed to the rear surface of the electronic device 200 or to expose only a portion of the hinge housing 310 to the rear surface of the electronic device 200. According to an embodiment, when the electronic device 200 is in the folded state, the first rotation support surface 214 and the second rotation support surface 224 may rotate along the curved outer surface of the hinge housing 310 to at least partially expose the hinge housing 310 to the rear surface of the electronic device 200.

According to an embodiment, the electronic device 200 may include at least one antenna 276 disposed in the first space 2201. According to an embodiment, the at least one antenna 276 may be disposed on the first battery 291 and the first rear surface cover 240 in the first space 2201. According to an embodiment, the at least one antenna 276 may include, for example, a near-field communication (NFC) antenna, a wireless charging antenna, and/or a magnetic secure transmission (MST) antenna. According to an embodiment, the at least one antenna 276 may execute, for example, short-range communication with an external device or wireless transmission/reception of power required for charging. In some embodiments, an antenna structure may be configured by at least a portion of the first side surface member 213 or the second side surface member 223 and/or a portion of the first support member 261 and the second support member 262, or a combination thereof.

According to an embodiment, the electronic device 200 may further include at least one electronic component assembly 274 or 275 and/or additional support members 263 and 273 disposed in the first space 2101 and/or the second space 2201. For example, the at least one electronic component assembly may include an interface connector port assembly 274 or a speaker assembly 275.

According to an embodiment, the electronic device 101 may include a first waterproof structure WP1 disposed between the first reinforcement plate 461 and the first support member 261 and a second waterproof structure WP2 disposed between the second reinforcement plate 462 and the second support member 262. According to an embodiment, the first waterproof structure WP1 may include a first waterproof member 481 disposed to form at least one first waterproof space 4811, 4812, or 4813 between the first reinforcement plate 461 and the first support member 261. According to an embodiment, the second waterproof structure WP2 may include a second waterproof member 482 (e.g., a (2-1)^{th} waterproof member 482), a third waterproof member 483 (e.g., a (2-2)^{th} waterproof member 483), and a fourth waterproof member 484 (e.g., a (2-3)^{th} waterproof member 484), which are arranged between the second reinforcing plate 462 and the second support member 262 so as to form at least one second waterproof space 4821. According to an embodiment, the fourth waterproof member 484 may be disposed to interconnect stepped and spaced spaces of the second waterproof member 482 and the third waterproof member 483.

According to various embodiments, the at least one first waterproof space 4811 may be disposed to accommodate a penetration path of a connection member (a flexible printed circuit board (FPCB)) as a wiring structure for connecting an electronic component disposed between the first reinforcement plate 461 and the first support member 262 to the first space 2101 through the first waterproof member 481. According to an embodiment, the at least one second waterproof space 4821 may be disposed to accommodate a penetration path of a connection member as a wiring structure for connecting an electronic component disposed between the second reinforcement plate 462 and the second support member 262 to the second space 2201 through the second waterproof member 482, the third waterproof member 483, and the fourth waterproof member 484. According to an embodiment, the at least one first waterproof space 4812 or 4813 may accommodate an area corresponding to at least one electronic component (e.g., a camera module or a sensor module) disposed to be supported by the first support member 261. According to an embodiment, the at least one second waterproof space 4821 may accommodate at least a portion of a bending portion that is folded toward the rear surface of the first display 230. For example, the at least one second waterproof space 4821 may be disposed to surround at least a portion of the bending portion 432 that extends from the display panel of the first display 230 and is folded to the rear surface. Accordingly, a control circuit and multiple electrical elements (not illustrated) disposed in the bending portion 432 may be protected from external moisture and/or foreign substances by being disposed in the at least one second waterproof space 4821.

In the electronic device 200 according to an exemplary embodiment of the disclosure, at least one waterproof member 481, 482, 483, or 484 includes at least one waterproof structure WP1 or WP2 disposed between the first support member 261 and the first reinforcement plate 461 of the first housing 210 and/or between the second support member 262 and the second reinforcement plate 462 of the second housing 220. Therefore, the phenomenon of the first display being damaged through the waterproof member may be reduced when separating the first display 230 from the housings 210 and 220 for the maintenance of the electronic device 200. In addition, the at least one waterproof member 481, 482, 483, or 484 is disposed to avoid the rear surface of the first display 230, which may improve external visibility and help ensure surface quality.

According to an embodiment, the one or more hinge devices 400 and 400-1 may include a first hinge device 400 disposed at one end in a direction parallel to the folding axis A and a second hinge device 400-1 disposed at the other end. According to an embodiment, the first hinge device 400 and the second hinge device 400-1 may have substantially the same configuration. According to an embodiment, the electronic device 200 may include a connection module 400-2 disposed between the first hinge device 400 and the second hinge device 400-1. According to an embodiment, the connection module 400-2 may be disposed through a combination of one or more gears and/or a combination of one or more links. In an embodiment, the connection module 400-2 may be replaced with the first hinge device 400. In an embodiment, the one or more hinge devices 400 and 400-1 may be disposed at one location or three or more locations spaced apart at a predetermined interval along a direction parallel to the folding axis A. According to an embodiment, the electronic device 200 may include a first hinge plate 311 and a second hinge plate 312 connected via the one or more hinge devices 400 and 400-1. According to an embodiment, when the electronic device 200 is in the unfolded state, the first hinge plate 311 may form the same plane as the first housing 210, and when the electronic device 200 is in the unfolded state, the second hinge plate 312 may form the same plane as the second housing 220. According to an embodiment, when the electronic device 200 is in the folded state, the first display 230 may be transformed into a shape having a predetermined curved surface (e.g., a "U" shape or a water drop shape) and accommodated in the inner space of the electronic device 200 through the one or more hinge devices 400 and 400-1. According to an embodiment, when the electronic device 200 is in the folded state, the first hinge plate 311 and the second hinge plate 312 may be moved to support at least a portion of the folding area (e.g., the folding area 230c in FIG. 3A) transformed into a shape having a curved surface in the first display 230. In an embodiment, when the electronic device 200 is in the folded state, the first housing 210 and the second housing 220 may be moved to support substantially untransformed flat portions of the first display 230 (e.g., the first area 230a and the second area 230b in FIG. 3A). In an embodiment, when the electronic device 200 is in the folded state, the first hinge plate 311 may not form the same flat surface as the first housing 210, and the second hinge plate 312 may also not form the same flat surface as the second housing 220.

The display module 230 described above is only an example for describing the disclosure, and the display module 230 does not necessarily include all of the components described above. Accordingly, it may be possible to configure the display module 230 by omitting some of the components described above or adding some of the components.

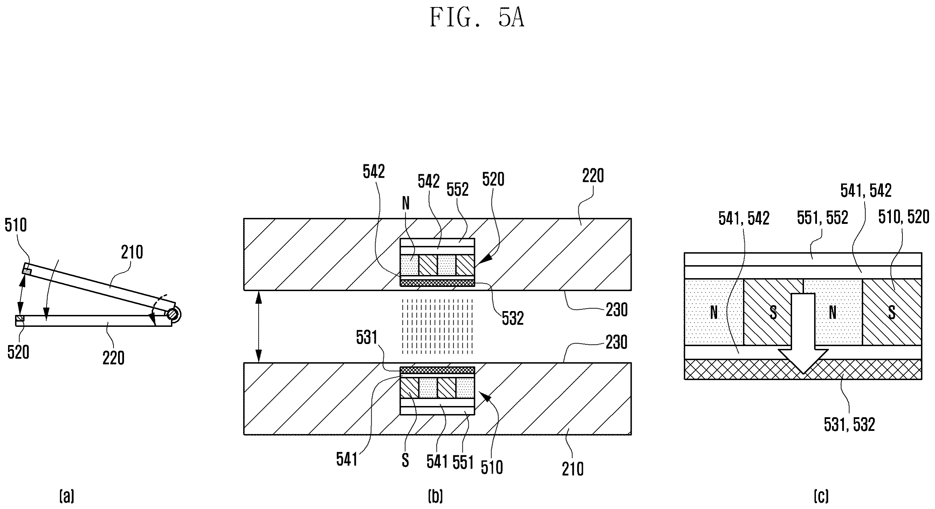

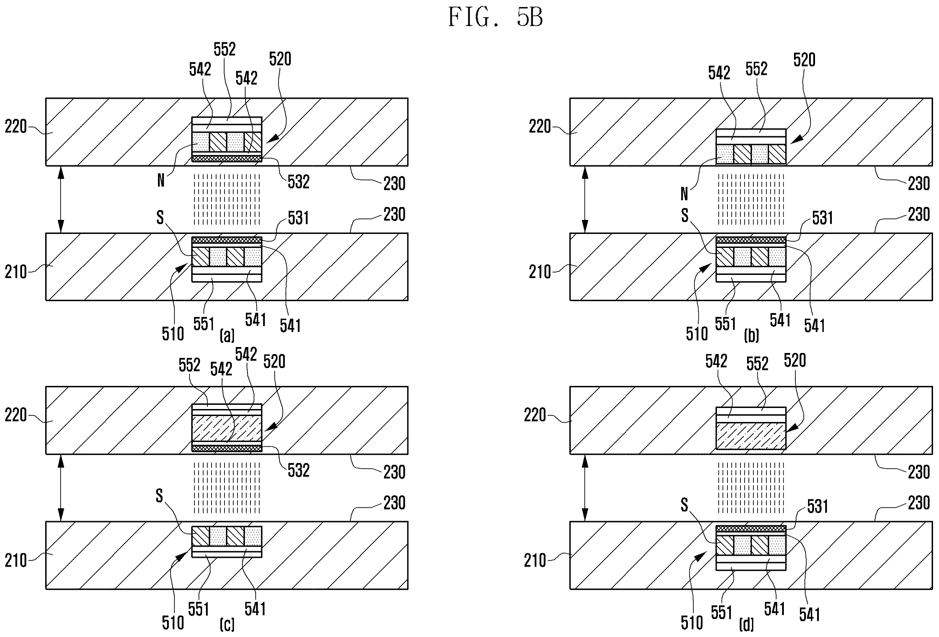

FIG. 5A is a view illustrating a positional relationship between the magnetic members and the pressure members of the electronic device 200 when the electronic device 200 transitions from an unfolded state to a folded state according to an embodiment of the disclosure. FIG. 5B is a view illustrating various arrangement relationships between the pressure sensors and the magnetic members in the first housing 210 and the second housing 220 according to an embodiment of the disclosure.

According to an embodiment, as illustrated in FIG. 5A, the electronic device 200 may include a plurality of magnetic members 510 and 520. In an embodiment, the magnetic members 510 and 520 may be respectively disposed in the first housing 210 and the second housing 220. In an embodiment, the magnetic members 510 and 520 may include a first magnetic member 510 disposed in the first housing 210 and a second magnetic member 520 disposed in the second housing 220. In an embodiment, the first magnetic member 510 and the second magnetic member 520 may be formed of magnetic materials that generate an attractive force as they are positioned adjacent to each other. In an embodiment, the first magnetic member 510 may be disposed at an edge of the first housing 210 so as to be adjacent to the first side surface member 213 disposed in the first housing 210. The second magnetic member 520 may be disposed to face the first magnetic member 510 when the electronic device 200 is in the folded state. For example, the second magnetic member 520 may be disposed at an edge of the second housing 220 so as to be adjacent to the second side surface member 223 disposed in the second housing 220. Accordingly, as the electronic device 200 transitions from the unfolded state to the folded state, an attractive force may be generated between the first and second magnetic members 510 and 520, allowing the electronic device 200 to remain fixed in the folded state.

According to an embodiment, as illustrated in FIG. 5B, the first and second magnetic members 510 and 520 may be made of the same or different materials. In an embodiment, the first and second magnetic members 510 and 520 may be magnets having different polarities. For example, when the first magnetic member 510 is an N-pole, the second magnetic member 520 may be an S-pole, or when the first magnetic member 510 is an S-pole, the second magnetic member 520 may be an N-pole. In an embodiment, the first and second magnetic members 510 and 520 may be magnets having alternately arranged different polarities. For example, referring to (a) and (b) of FIG. 5B, the first and second magnetic members 510 and 520 may be Halbach array magnets in which N-poles and S-poles are alternately arranged. In this case, the first and second magnetic members 510 and 520 may be arranged such that magnetic poles of different polarities face each other. For example, in the folded state of the electronic device 200, the N-pole portions of the first magnetic member 510 may face the S-pole portions of the second magnetic member 520, and the S-pole portions of the first magnetic member 510 may face the N-pole portions of the second magnetic member 520. In an embodiment, one of the first and second magnetic members 510 and 520 may be a magnet, and the other may be a metal plate. For example, referring to (c) and (d) of FIG. 5B, the first magnetic member 510 may be a magnet, and the second magnetic member 520 may be a metal plate formed of a metallic material. In an embodiment, the first magnetic member 510 may be a Halbach array magnet in which different polarities (N-pole and S-pole) are alternately arranged. In contrast, in another embodiment not illustrated in the drawings, the first magnetic member 510 may be a metal plate, and the second magnetic member 520 may be a magnet. Accordingly, as the electronic device 200 transitions from the unfolded state to the folded state, an attractive force may be generated between the first and second magnetic members 510 and 520, allowing the electronic device 200 to remain fixed in the folded state.

According to an embodiment, as illustrated in FIGS. 5A and 5B, the electronic device 200 may include one or more pressure sensors 531 and 532. In an embodiment, the pressure sensors 531 and 532 may be configured to measure the intensity of applied pressure and convert it into an electrical signal. For example, the pressure sensors 531 and 532 may measure the intensity of pressure applied via the magnetic members 510 and 520, which will be described later. In an embodiment, the pressure sensors 531 and 532 may respond immediately to a change in pressure applied via the magnetic members 510 and 520.

In an embodiment, the pressure sensors 531 and 532 may be capacitive pressure sensors. For example, the pressure sensors 531 and 532 may be capacitive sensors configured to detect a change in external pressure through a change in capacitance caused by a change in distance between metal electrodes due to the applied pressure. In addition, the pressure sensors 531 and 532 may measure the external pressure using various other methods. For example, the pressure sensors 531 and 532 may be selected from among various types of sensors, such as a piezoresistive pressure sensor, an optical pressure sensor, a piezoelectric pressure sensor, and/or a potentiometric pressure sensor.

In an embodiment, the pressure sensors 531 and 532 may be disposed in or on at least one of the first housing 210 and the second housing 220. In an embodiment, referring to (a) of FIGS. 5A and FIG. 5B, the pressure sensors 531 and 532 may include a first pressure sensor 531 disposed in the first housing 210 and a second pressure sensor 532 disposed in the second housing 220. In an embodiment, the first pressure sensor 531 may be disposed between the first display 230 and the first magnetic member 510. The second pressure sensor 532 may be disposed between the first display 230 and the second magnetic member 520.

According to an embodiment, the pressure sensors 531 and 532 may be pressed by the magnetic members. In an embodiment, as illustrated in (a) of FIGS. 5A and 5B, the first pressure sensor 531 may be disposed between the first display 230 and the first magnetic member 510, and the second pressure sensor 532 may be disposed between the first display 230 and the second magnetic member 520. In this case, as the electronic device 200 transitions from the unfolded state to the folded state, an attractive force may act between the first magnetic member 510 and the second magnetic member 520. Accordingly, the first magnetic member 510 may press the first pressure sensor 531 due to the attractive force acting with the second magnetic member 520, and the second magnetic member 520 may press the second pressure sensor 532 due to the attractive force acting with the first magnetic member 510.

In an embodiment, a pressure sensor may be disposed only in one of the first housing 210 and the second housing 220. In an embodiment, referring to (b) and (d) of FIG. 5B, a pressure sensor may be disposed only between the first display 230 and the first magnetic member 510 in the first housing 210. For example, referring to (b) of FIG. 5B, the electronic device 200 may include a first pressure sensor 531 disposed between the first display 230 and the first magnetic member 510. In this case, a pressure sensor (e.g., the second pressure sensor 532) may be omitted between the first display 230 and the second magnetic member 520. In an embodiment, referring to (c) of FIG. 5B, a pressure sensor may be disposed only between the first display 230 and the second magnetic member 520 in the second housing 220. For example, referring to (c) of FIG. 5B, the electronic device 200 may include a second pressure sensor 532 disposed between the first display 230 and the second magnetic member 520. In this case, a pressure sensor (e.g., the first pressure sensor 531) may be omitted between the first display 230 and the first magnetic member 510.

In an embodiment, the first pressure sensor 531 and the second pressure sensor 532 may respectively measure the intensity of pressure applied through the first magnetic member 510 and the second magnetic member 520, and convert the measured pressure into an electrical signal. In an embodiment, the pressure applied by the first magnetic member 510 to the first pressure sensor 531 may vary depending on a change in attractive force with the second magnetic member 520 according to the distance therebetween. The first pressure sensor 531 may detect a change in pressure applied through the first magnetic member 510 according to a change in attractive force acting between the first magnetic member 510 and the second magnetic member 520. In an embodiment, the pressure applied by the second magnetic member 520 to the second pressure sensor 532 may vary depending on a change in attractive force according to the distance from the first magnetic member 510 to the second magnetic member 520. The second pressure sensor 532 may detect a change in pressure applied through the second magnetic member 520 according to a change in attractive force acting between the first magnetic member 510 and the second magnetic member 520.

Similarly, in an embodiment, as illustrated in (b), (c), and (d) of FIG. 5B, a pressure sensor may be positioned between the first display 230 and the first magnetic member 510, or between the first display 230 and the second magnetic member 520. For example, when a pressure sensor (e.g., the first pressure sensor 531) is positioned between the first display 230 and the first magnetic member 510, the first magnetic member 510 may press the pressure sensor (e.g., the first pressure sensor 531) by an attractive force acting between the first magnetic member 510 and the second magnetic member 520. Alternatively, when a pressure sensor (e.g., the second pressure sensor 532) is positioned between the first display 230 and the second magnetic member 520, the second magnetic member 520 may press the pressure sensor (e.g., the second pressure sensor 532) by an attractive force acting between the first magnetic member 510 and the second magnetic member 520. The processor may receive an electrical signal generated from a pressure sensor (e.g., the first pressure sensor 531 or the second pressure sensor 532) as the first magnetic member 510 or the second magnetic member 520 is pressed.

According to an embodiment, as illustrated in FIGS. 5A and 5B, the first magnetic member 510 and the first pressure sensor 531 may be disposed in a first seating portion 551 in the first housing 210. In an embodiment, a structure may be provided in which the first display 230, the first pressure sensor 531, the first magnetic member 510, and the first seating portion 551 are stacked in that order. In an embodiment, the first seating portion 551 may be formed integrally with the first housing 210, or may be separately formed and coupled to the first housing 210. In an embodiment, the first seating portion 551 may be a groove formed in the first housing 210. In an embodiment, the first seating portion 551 may be a first bracket formed separately from the first housing 210. In this case, a structure may be provided in which the first display 230, the first pressure sensor 531, the first magnetic member 510, and the first bracket are stacked in that order.

In an embodiment, a first elastic member 541 may be disposed between the first pressure sensor 531 and the first magnetic member 510 and/or between the first magnetic member 510 and the first seating portion 551. In an embodiment, the first elastic member 541 disposed between the first pressure sensor 531 and the first magnetic member 510 may press the first pressure sensor 531 through the attractive force acting between the first magnetic member 510 and the second magnetic member 520. The first elastic member 541 disposed between the first magnetic member 510 and the first seating portion 551 may protect the first magnetic member 510 and the first pressure sensor 531 from external impacts applied to the electronic device 200.

Likewise, the above-described configuration may also be applied to the second housing 220. In an embodiment, the second magnetic member 520 and the second pressure sensor 532 may be disposed in a second seating portion 552 in the second housing 220. In an embodiment, a structure may be provided in which the first display 230, the second pressure sensor 532, the second magnetic member 520, and the second seating portion 552 are stacked in that order. In an embodiment, the second seating portion 552 may be formed integrally with the second housing 220 or may be separately formed and coupled to the second housing 220. In an embodiment, the second seating portion 552 may be a groove formed in the second housing 220. In an embodiment, the second seating portion 552 may be a second bracket formed separately from the second housing 220. In this case, a structure may be provided in which the first display 230, the second pressure sensor 532, the second magnetic member 520, and the second bracket are stacked in that order.

In an embodiment, a second elastic member 542 may be disposed between the second pressure sensor 532 and the second magnetic member 520 and/or between the second magnetic member 520 and the second seating portion 552. In an embodiment, the second elastic member 542 disposed between the second pressure sensor 532 and the second magnetic member 520 may press the second pressure sensor 532 through the attractive force acting between the first magnetic member 510 and the second magnetic member 520. The second elastic member 542 disposed between the second magnetic member 520 and the second seating portion 552 may protect the second magnetic member 520 and the second pressure sensor 532 from external impacts applied to the electronic device 200.

In an embodiment, the first elastic member 541 and the second elastic member 542 may be formed of an elastic material such as Poron, urethane, silicone, or a spring. The above description is merely illustrative, and the first elastic member 541 and the second elastic member 542 may be formed of various materials implementable by those ordinarily skilled in the art.

The above configuration is merely illustrative, and at least one of the above components may be omitted. For example, when the electronic device 200 includes only one of the first pressure sensor 531 and the second pressure sensor 532, the other of the first pressure sensor 531 and the second pressure sensor 532 may be omitted from the electronic device 200. In an embodiment, referring to (b) and (d) of FIG. 5B, the second pressure sensor 532 may be omitted from the second housing 220. In this case, the second elastic member 542, which is disposed between the second magnetic member 520 and the second pressure sensor 532, may also be omitted. In an embodiment, referring to (c) of FIG. 5B, the first pressure sensor 531 may be omitted from the first housing 210. In this case, the first elastic member 541, which is disposed between the first magnetic member 510 and the first pressure sensor 531, may also be omitted.

According to an embodiment, the hinge devices 400 and 400-1 may include a plurality of gears that rotate in conjunction with each other as the first housing 210 and the second housing 220 are folded or unfolded. At least one of the plurality of gears may be connected to a driving device (not illustrated). In an embodiment, the driving device may be a motor that is electrically connected to the processor and configured to rotate the gears. Hereinafter, for convenience of description, it is assumed that the driving device is a motor.

According to an embodiment, the electronic device 200 may include an angle sensor (not illustrated) electrically connected to the processor. In an embodiment, the electronic device 200 may identify the folding angle between the first housing 210 and the second housing 220 through the angle sensor. In an embodiment, the angle sensor may include a 6 degrees of freedom (6DoF) sensor including an accelerometer configured to detect acceleration in the X, Y, and Z axes and a gyro sensor configured to detect angular velocity in the X, Y, and Z axes. In an embodiment, the angle sensor may include an encoder. In an embodiment, the processor may be connected to an absolute encoder configured to divide a range from 0 degrees to 180 degrees at a constant ratio and to measure a rotation angle of a motor based on electrical signals generated at each divided position. The processor may identify the rotation angle of the hinge devices 400 and 400-1 through the absolute encoder and thereby determine the folding angle between the first housing 210 and the second housing 220. The above-described angle sensor is merely illustrative, and the angle sensor may include various types of sensors capable of measuring the folding angle between the first housing 210 and the second housing 220.

According to an embodiment, a stop operation and a free-stop operation may be required to enhance the usability of the electronic device 200. The stop operation may refer to an operation in which the electronic device 200 maintains the state in the fully folded or in the fully unfolded state. The free-stop operation may refer to an operation in which the electronic device 200 maintains its state when no external force exceeding a certain level is applied during a transition from a folded state to an unfolded state.

Meanwhile, when the sizes of the first housing 210 and the second housing 220 increase to expand the screen of the first display 230, the overall weight of the electronic device 200 may also increase. Due to the increase in weight of the first housing 210 and the second housing 220, and the trend toward thinner electronic device 200 designs, the hinge devices 400 and 400-1 may face limitations in implementing the free-stop and stop operations. For example, as the weight of the electronic device 200 increases, more force may be required for a user to open or close the electronic device 200. In addition, when the electronic device 200 transitions from the closed state to the open state, the weight of the housing may cause the electronic device 200 to unfold at once without the free-stop operation, which may result in damage to the hinge devices 400 and 400-1. Furthermore, when the foldable electronic device 200 transitions from the open state to the closed state, it may close at once without the free-stop operation, which may cause a user's finger-pinching accident or damage to the display. According to an embodiment of the disclosure, the hinge devices 400 and 400-1 may be connected to a motor configured to open or close the electronic device 200. The electronic device 200 may identify a user's attempt to open or close the electronic device 200 through a pressure sensor disposed in at least one of the first housing 210 and the second housing 220. When the processor identifies a user's attempt to open or close the electronic device 200 through the pressure sensor, the processor may assist in opening or closing the electronic device 200 by controlling the motor. Details regarding the control of the folding operation of the electronic device 200 using the pressure sensor, the angle sensor, and the motor will be described below.

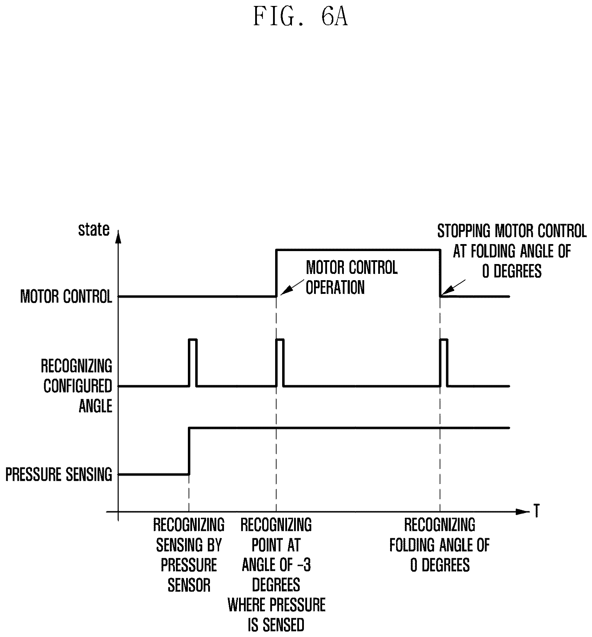

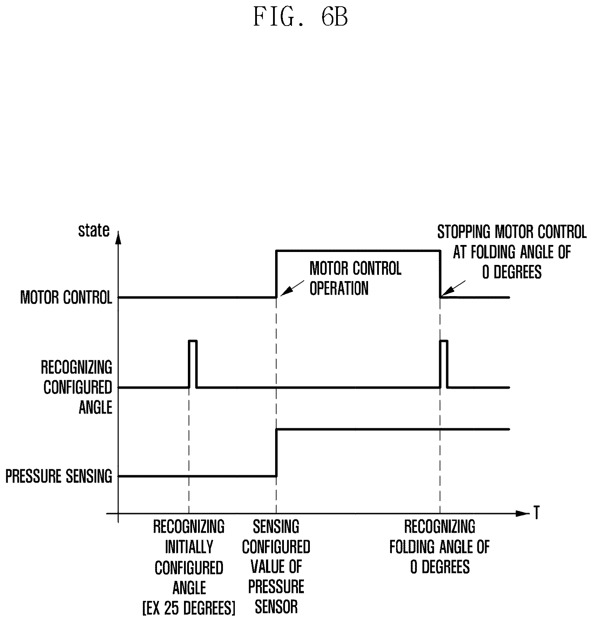

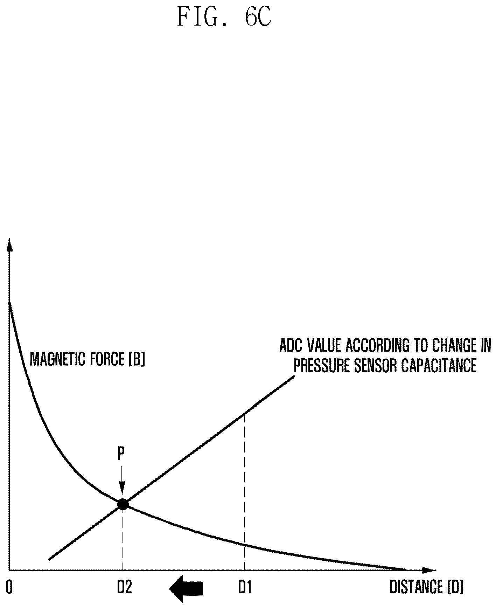

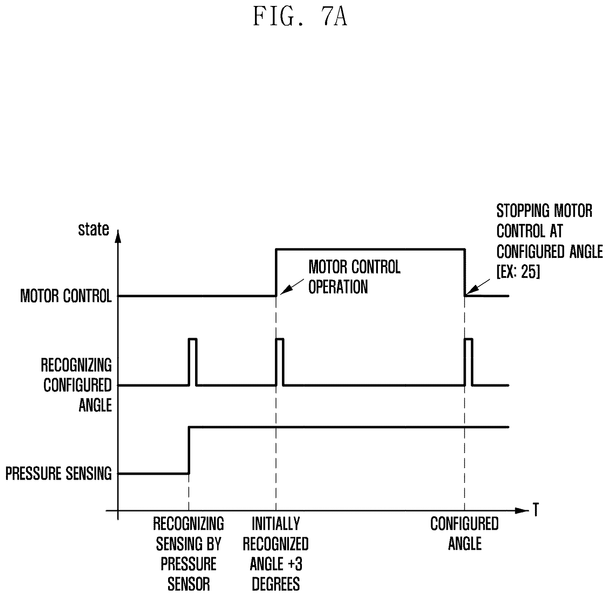

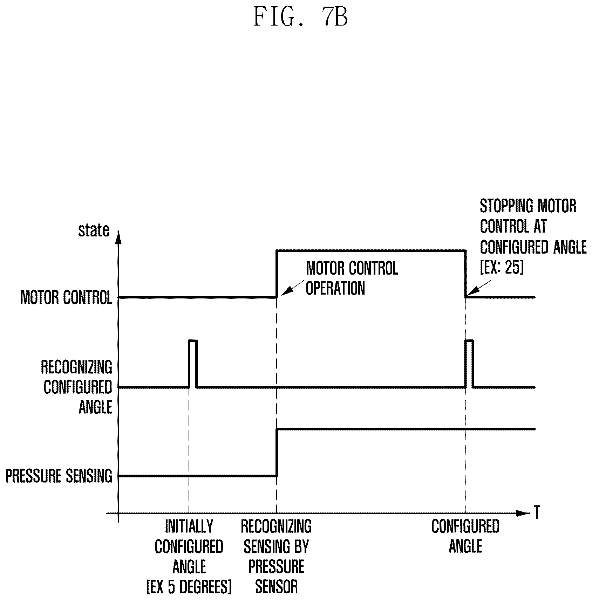

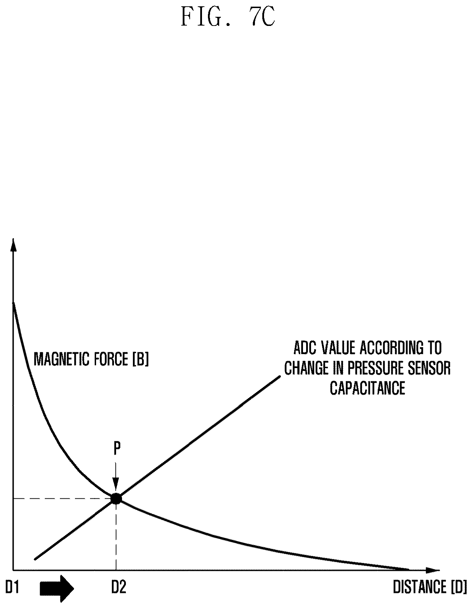

FIGS. 6A and 6B are views illustrating control using a pressure sensor, an angle sensor, and a motor when the electronic device 200 transitions from the unfolded state to the folded state according to an embodiment of the disclosure. FIG. 6C is a view illustrating sensing by the pressure sensor via a magnetic member when the electronic device 200 transitions from the unfolded state to the folded state according to an embodiment of the disclosure. FIGS. 7A and 7B are views illustrating control using a pressure sensor, an angle sensor, and a motor when the electronic device 200 transitions from the folded state to the unfolded state according to an embodiment of the disclosure. FIG. 7C is a view illustrating sensing by the pressure sensor via a magnetic member when the electronic device 200 transitions from the folded state to the unfolded state according to an embodiment of the disclosure.

FIGS. 6A, 6B, 7A, and 7B to be described below may illustrate peak values resulting from signals generated by the angle sensor, the first pressure sensor 531, and the motor over time. Hereinafter, for convenience of description, it is assumed that the electronic device 200 includes only the first pressure sensor 531 disposed in the first housing 210.

In FIGS. 6A to 6C, the time-sequential control using the pressure sensor, the angle sensor, and the motor will be described when the electronic device 200 transitions from the unfolded state to the folded state.

According to an embodiment, as illustrated in FIGS. 6A and 6C, a time-sequential configuration for controlling the motor connected to the hinge devices 400 and 400-1 when the electronic device 200 transitions from the unfolded state to the folded state may be configured as follows. In an embodiment, a user may transition the electronic device 200 from the unfolded state to the folded state. Referring to FIG. 6C, as the first housing 210 and the second housing 220 approach each other to face one another, the distance between the first housing 210 and the second housing 220 may decrease (e.g., a distance decrease from D1 to D2 in FIG. 6C). In this case, an attractive force between the first magnetic member 510 disposed in the first housing 210 and the second magnetic member 520 disposed in the second housing 220 may increase. The first magnetic member 510 may press the first pressure sensor 531, which is disposed between the first display 230 and the first magnetic member 510, through an attractive force with the second magnetic member 520.

In an embodiment, referring to FIGS. 6A to 6C, the first pressure sensor 531 may generate a pressure signal P (e.g., P in FIG. 6C) based on the pressing by the first magnetic member 510. The processor may control the motor upon identifying that the pressure signal P generated by the first pressure sensor 531 reaches a predetermined value. For example, the processor may configure a reference value. A predetermined value may be a value that is increased or decrease by a predetermined amount relative to a reference value configured in advance. The predetermined value may be configured in advance during the manufacturing process of the electronic device 200 and stored in memory of the electronic device 200, or may be a value arbitrarily configured by a user. Accordingly, the processor may control the motor to open or close the electronic device 200 upon identifying that the pressure signal P generated by the first pressure sensor 531 reaches the predetermined value.

In an embodiment, referring to FIGS. 6A to 6C, the first pressure sensor 531 may generate a first pressure signal by being pressed by the first magnetic member 510 as the electronic device 200 transitions from the unfolded state to the folded state. The processor may identify whether the first pressure signal reaches a predetermined value. Thereafter, the processor (e.g., the processor 120 of FIG. 1) may identify, through the angle sensor, a first folding angle between the first housing 210 and the second housing 220 at a time point when the first pressure signal is generated by the first pressure sensor 531. In addition, the processor may identify, through the angle sensor, a change in folding angle between the first housing 210 and the second housing 220 from the time point when the first pressure signal is generated by the first pressure sensor 531. For example, the processor may identify a second folding angle between the first housing 210 and the second housing 220, measured by the angle sensor after the time point when the first pressure signal is generated by the first pressure sensor 531. The processor may identify whether the second folding angle is decreased by a predetermined value relative to the first folding angle. The predetermined value may be a value stored in advance in the memory. Thereafter, the processor may control the motor based on the identified second folding angle. For example, the processor may control the motor to fold the electronic device 200 upon identifying that the second folding angle is decreased by 3 degrees relative to the first folding angle. Thereafter, the processor may stop operation of the motor upon identifying, through the angle sensor, that the folding angle between the first housing 210 and the second housing 220 reaches a predetermined angle. For example, the processor may control the motor to stop upon identifying that the folding angle is 0 degrees. Thereafter, the processor may initialize the values input to the first pressure sensor 531, the angle sensor, and the motor for a subsequent operation (e.g., recognizing an unfolding operation).

According to an embodiment, a time-sequential configuration for controlling the motor connected to the hinge devices 400 and 400-1 when the electronic device 200 transitions from the unfolded state to the folded state may be implemented as illustrated in FIG. 6B. In an embodiment, the processor may identify whether the folding angle between the first housing 210 and the second housing 220, as measured by the angle sensor, reaches a predetermined angle. For example, the processor may compare the folding angle identified through the angle sensor with folding angle information stored in the memory. The processor may identify a second pressure signal generated by the first pressure sensor 531 after identifying that the folding angle measured by the angle sensor reaches a pre-stored value. For example, the processor may detect the second pressure signal generated by the first pressure sensor 531 after identifying that the folding angle measured by the angle sensor corresponds to about 25 degrees. The processor may control the motor to fold the electronic device 200 upon identifying that the second pressure signal reaches a predetermined value. Thereafter, the processor may stop operation of the motor upon identifying, through the angle sensor, that the folding angle between the first housing 210 and the second housing 220 reaches a predetermined angle. For example, the processor may control the motor to stop upon identifying that the folding angle is 0 degrees. Thereafter, the processor may initialize the values input to the first pressure sensor 531, the angle sensor, and the motor for a subsequent operation.

In the above description, the angle at which the processor stops the motor is merely an example, and the motor may be stopped at various angles depending on various configurations.

In an embodiment, the pressure intensity applied to the first pressure sensor 531 when the second pressure signal is generated may be different from that applied to the first pressure sensor 531 when the first pressure signal is generated. For example, the folding angle between the first housing 210 and the second housing 220 when the second pressure signal is detected by the processor may be different from the folding angle between the first housing 210 and the second housing 220 when the first pressure signal is detected by the processor. In such a case, the values of the attractive force acting between the first magnetic member 510 and the second magnetic member 520 may vary. For example, the folding angle when the second pressure signal is detected may be smaller than the folding angle when the first pressure signal is detected. In such a case, the pressure intensity applied to the first pressure sensor 531 when the second pressure signal is generated may be greater than that applied to the first pressure sensor 531 when the first pressure signal is generated. In some embodiments, the pressure intensity applied to the first pressure sensor 531 when the second pressure signal is generated may be the same as that applied to the first pressure sensor 531 when the first pressure signal is generated. For example, if the folding angle when the first pressure signal is generated is the same as that when the second pressure signal is generated, the pressure intensity applied to the first pressure sensor 531 may be the same.

Hereinafter, referring to FIGS. 7A to 7C, the time-sequential control using the pressure sensor, the angle sensor, and the motor will be described when the electronic device 200 transitions from the folded state to the unfolded state.

According to an embodiment, as illustrated in FIGS. 7A to 7C, a time-sequential configuration for controlling the motor connected to the hinge devices 400 and 400-1 when the electronic device 200 transitions from the folded state to the unfolded state may be implemented as follows. In an embodiment, a user may transition the electronic device 200 from the folded state to the unfolded state. Referring to FIG. 7C, as the first housing 210 and the second housing 220 move away from each other, the distance between the first housing 210 and the second housing 220 may increase (e.g., an increase in distance from D1 to D2 in FIG. 7C). In such a case, the attractive force acting between the first magnetic member 510 disposed in the first housing 210 and the second magnetic member 520 disposed in the second housing 220 may weaken. For example, as the electronic device 200 transitions from the fully folded state to the unfolded state via the intermediate state, the attractive force acting between the first magnetic member 510 and the second magnetic member 520 may decrease compared to that when the electronic device 200 is in the fully folded state. In such a case, the pressure intensity with which the first magnetic member 510 presses the first pressure sensor 531 may decrease.

In an embodiment, referring to FIGS. 7A to 7C, the processor may detect a change in the pressure intensity applied to the first pressure sensor 531. In an embodiment, the first pressure sensor 531 may generate a pressure signal P (e.g., P in FIG. 7C) based on the pressing by the first magnetic member 510. The first pressure sensor 531 may be pressed by the first magnetic member 510 as the electronic device 200 transitions from the folded state to the unfolded state, and may generate a third pressure signal. The processor may identify whether the third pressure signal reaches a predetermined value. For example, the predetermined value may be a value decreased by a predetermined amount relative to a reference value configured in advance. Thereafter, the processor may identify, through the angle sensor, a third folding angle between the first housing 210 and the second housing 220 at the time point when the third pressure signal is generated by the first pressure sensor 531. In addition, the processor may identify, through the angle sensor, a change in the folding angle between the first housing 210 and the second housing 220 from the time point when the third pressure signal is generated by the first pressure sensor 531. For example, the processor may identify a fourth folding angle between the first housing 210 and the second housing 220, measured by the angle sensor after the time point when the third pressure signal is generated by the first pressure sensor 531. The processor may identify that the fourth folding angle is increased by a predetermined value (e.g., a value stored in the memory) relative to the third folding angle. Thereafter, the processor may control the motor based on the identified fourth folding angle. For example, the processor may control the motor to unfold the electronic device 200 upon identifying that the fourth folding angle is increased by 3 degrees relative to the third folding angle. Thereafter, the processor may stop operation of the motor upon identifying, through the angle sensor, that the folding angle between the first housing 210 and the second housing 220 reaches a predetermined angle. For example, the processor may control the motor to stop upon identifying that the folding angle is 25 degrees. Thereafter, the processor may initialize the values input to the first pressure sensor 531, the angle sensor, and the motor for a subsequent operation.

In the above description, the angle at which the processor stops the motor is merely an example, and the motor may be stopped at various angles depending on various configurations. For example, the processor may stop the motor when the folding angle reaches 180 degrees.

According to an embodiment, a time-sequential configuration for controlling the motor connected to the hinge devices 400 and 400-1 when the electronic device 200 transitions from the folded state to the unfolded state may be implemented as illustrated in FIG. 7B. In an embodiment, the processor may identify whether the folding angle between the first housing 210 and the second housing 220, as measured by the angle sensor, reaches a predetermined angle. For example, the processor may compare the folding angle identified through the angle sensor with folding angle information stored in the memory. The processor may identify a fourth pressure signal generated by the first pressure sensor 531 after identifying that the folding angle measured by the angle sensor reaches a pre-stored value. For example, the processor may detect the fourth pressure signal generated by the first pressure sensor 531 after identifying that the folding angle measured by the angle sensor corresponds to about 5 degrees. The processor may control the motor to unfold the electronic device 200 upon identifying that the fourth pressure signal reaches a predetermined value. Thereafter, the processor may stop operation of the motor upon identifying, through the angle sensor, that the folding angle between the first housing 210 and the second housing 220 reaches a predetermined angle. For example, the processor may control the motor to stop upon identifying that the folding angle is 25 degrees. Thereafter, the processor may initialize the values input to the first pressure sensor 531, the angle sensor, and the motor for a subsequent operation.

In an embodiment, the pressure intensity applied to the first pressure sensor 531 when the fourth pressure signal is generated may be different from that applied to the first pressure sensor 531 when the third pressure signal is generated. For example, the folding angle between the first housing 210 and the second housing 220 when the fourth pressure signal is detected by the processor may be different from the folding angle between the first housing 210 and the second housing 220 when the third pressure signal is detected by the processor. In such a case, the values of the attractive force acting between the first magnetic member 510 and the second magnetic member 520 may vary. For example, the folding angle when the fourth pressure signal is detected may be greater than the folding angle when the third pressure signal is detected. In such a case, the pressure intensity applied to the first pressure sensor 531 when the fourth pressure signal is generated may be smaller than that applied to the first pressure sensor 531 when the third pressure signal is generated. In some embodiments, the pressure intensity applied to the first pressure sensor 531 when the fourth pressure signal is generated may be the same as that applied to the first pressure sensor 531 when the third pressure signal is generated. For example, if the folding angle when the third pressure signal is generated is the same as that when the fourth pressure signal is generated, the pressure intensity applied to the first pressure sensor 531 may be the same.

In the above description, the control of the motor using the pressure sensors 531 and 532 has been described assuming that the first pressure sensor 531 is disposed in the first housing 210. The description of the "first pressure sensor 531" may equally apply to the "second pressure sensor 532." In addition, the first pressure sensor 531 and the second pressure sensor 532 may be disposed in the first housing 210 and the second housing 220, respectively. In such a case, the processor may detect a signal generated first among the signals generated by the first pressure sensor 531 pressed by the first magnetic member 510 and the second pressure sensor 532 pressed by the second magnetic member 520, and may control the motor according to the operation described above with reference to FIGS. 6A to 7C.

In an embodiment, the operation in which the processor identifies that the electronic device 200 transitions from the unfolded state to the folded state through the first pressure sensor 531 and the second pressure sensor 532 may be as follows.

According to an embodiment, the processor may detect one pressure signal from among the pressure signals generated by the first pressure sensor 531 and the second pressure sensor 532. Here, the one pressure signal may be either the signal generated earlier or the signal generated later among the pressure signal generated by the first pressure sensor 531 and the pressure signal generated by the second pressure sensor 532. In an embodiment, the processor may identify whether the detected one pressure signal reaches a predetermined value. For example, the processor may identify whether the detected one pressure signal is increased by a predetermined amount relative to a reference value. Thereafter, the processor may identify a first folding angle between the first housing 210 and the second housing 220, measured by the angle sensor at the time point when the detected one pressure signal is generated. Thereafter, the processor may identify a second folding angle between the first housing 210 and the second housing 220, measured by the angle sensor after the time point when the detected one pressure signal is generated. The processor may control the motor to fold the electronic device 200 after identifying that the second folding angle is decreased by a predetermined value relative to the first folding angle. Thereafter, the processor may stop the operation of the motor after identifying, through the angle sensor, that the folding angle between the first housing 210 and the second housing 220 reaches a predetermined angle (e.g., 0 degrees).

According to an embodiment, the processor may recognize one pressure signal from among the pressure signals generated by the first pressure sensor 531 and the second pressure sensor 532 after the folding angle reaches a certain angle. In an embodiment, the processor may identify, through the angle sensor, that the folding angle between the first housing 210 and the second housing 220 reaches a predetermined angle. The processor may detect one pressure signal from among the pressure signals generated by the first pressure sensor 531 and the second pressure sensor 532 after the folding angle reaches the predetermined angle. The processor may determine whether the detected one pressure signal reaches the predetermined value. For example, the processor may identify whether the detected one pressure signal is increased by a predetermined amount relative to a reference value. Thereafter, the processor may control the motor to fold the electronic device 200 based on the detected pressure signal. The processor may stop the operation of the motor after identifying, through the angle sensor, that the folding angle between the first housing 210 and the second housing 220 reaches a predetermined angle (e.g., 0 degrees).

In contrast, the operation in which the processor identifies that the electronic device 200 transitions from the folded state to the unfolded state through the first pressure sensor 531 and the second pressure sensor 532 may be as follows.

According to an embodiment, the processor may detect one pressure signal from among the pressure signals generated by the first pressure sensor 531 and the second pressure sensor 532. Here, the one pressure signal may be a signal generated earlier or later among the pressure signals generated by the first pressure sensor 531 and the second pressure sensor 532. In an embodiment, the processor may identify whether the detected one pressure signal reaches a predetermined value. For example, the processor may identify whether the detected one pressure signal is decreased by a predetermined amount relative to a reference value. In an embodiment, the processor may identify a third folding angle between the first housing 210 and the second housing 220, measured by the angle sensor at the time point when the pressure signal detected earlier is generated. Thereafter, the processor may identify a fourth folding angle between the first housing 210 and the second housing 220, measured by the angle sensor after the time point when the pressure signal detected earlier is generated. The processor may control the motor to unfold the electronic device 200 after identifying that the fourth folding angle is increased by a predetermined value relative to the third folding angle. Thereafter, the processor may stop the operation of the motor after identifying, through the angle sensor, that the folding angle between the first housing 210 and the second housing 220 reaches a predetermined angle (e.g., 180 degrees).

In an embodiment, the processor may recognize one pressure signal from among the pressure signals generated by the first pressure sensor 531 and the second pressure sensor 532 after the folding angle reaches a certain angle. In an embodiment, the processor may identify, through the angle sensor, that the folding angle between the first housing 210 and the second housing 220 reaches a predetermined angle. The processor may detect one pressure signal from among the pressure signals generated by the first pressure sensor 531 and the second pressure sensor 532 after the folding angle reaches the predetermined angle. The processor may determine whether the detected one pressure signal reaches the predetermined value. For example, the processor may identify whether the detected one pressure signal is decreased by a predetermined amount relative to a reference value. Thereafter, the processor may control the motor to unfold the electronic device 200 based on the detected pressure signal. The processor may stop the operation of the motor after identifying, through the angle sensor, that the folding angle between the first housing 210 and the second housing 220 reaches a predetermined angle (e.g., 0 degrees).

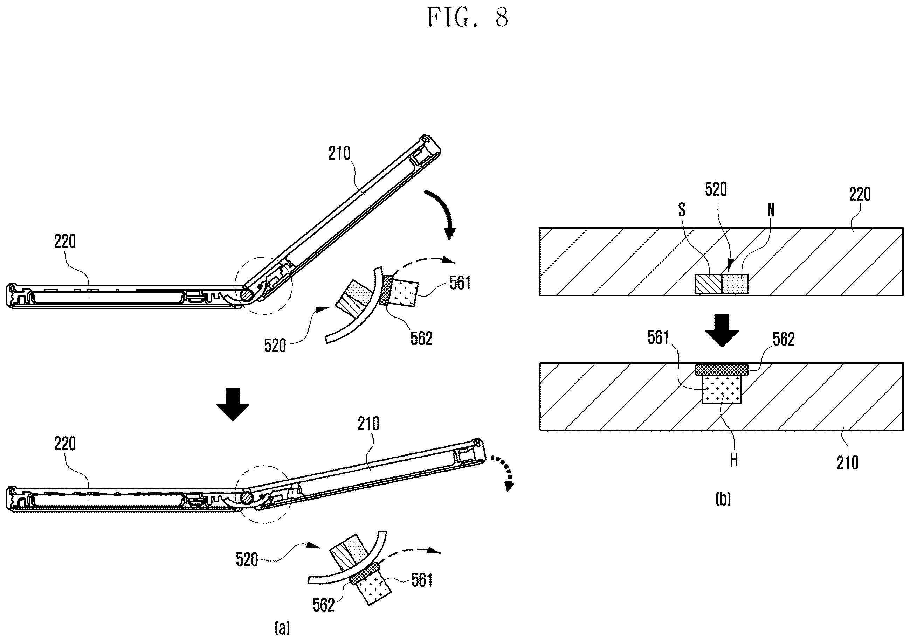

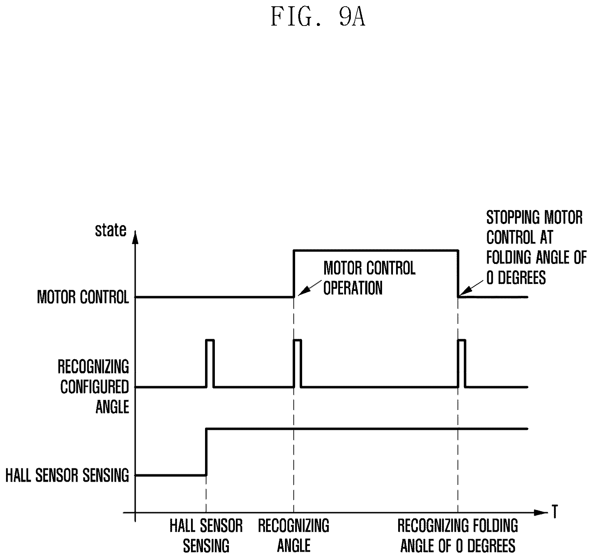

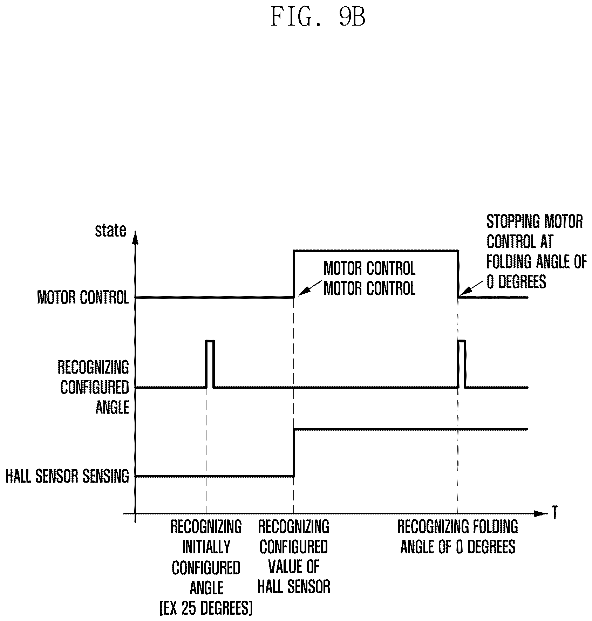

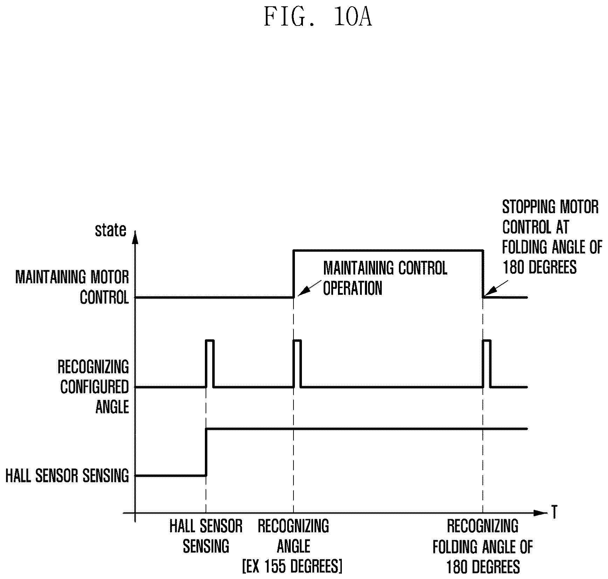

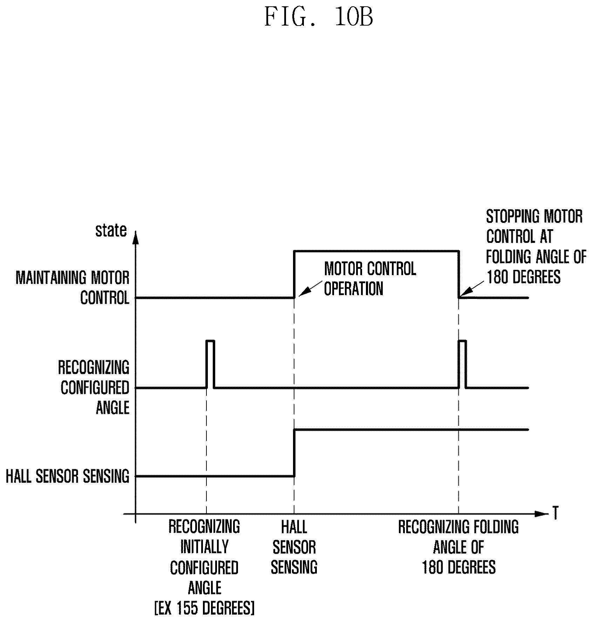

FIG. 8 is a view illustrating a positional relationship between a Hall sensor 561 and magnets arranged in the electronic device 200 according to an embodiment of the disclosure. FIGS. 9A and 9B are views illustrating control using the Hall sensor 561 and the angle sensor when the electronic device 200 transitions from the unfolded state to the folded state according to an embodiment of the disclosure. FIGS. 10A and 10B are views illustrating control using the Hall sensor 561 and the angle sensor when the electronic device 200 transitions from the folded state to the unfolded state according to an embodiment of the disclosure.

FIGS. 9A, 9B, 10A, and 10B to be described below may illustrate peak values resulting from signals generated by the angle sensor, the Hall sensor 561, and the motor over time.

According to an embodiment, as illustrated in FIG. 8, the electronic device 200 may include a Hall sensor 561. In an embodiment, the Hall sensor 561 may be a sensor configured to detect the proximity of an object. For example, the Hall sensor 561 may detect a change in magnetic field generated by a magnetic body (e.g., a magnet) in proximity to the Hall sensor, so as to determine the proximity of the object. In an embodiment, the Hall sensor 561 may detect a change in magnetic field generated by a magnet 520 as the distance between the Hall sensor 561 and the magnet 520 changes, the magnet 520 being disposed adjacent to the hinge devices 400 and 400-1. In an embodiment, the magnet 520 may be fixed to the hinge devices 400 and 400-1 or to one end of the hinge housing 310.

According to an embodiment, the Hall sensor 561 may be disposed in one of the first housing 210 and the second housing 220 so as to face the magnet 520 when the electronic device 200 is in the unfolded state. In an embodiment, the Hall sensor 561 may be connected to a substrate 562 to operate. Hereinafter, for convenience of description, it is assumed that the Hall sensor 561 is fixed to a distal end of the first housing 210 and the magnet 520 is fixed to the hinge housing 310.

According to an embodiment, the processor (e.g., the processor 120 of FIG. 1) may identify, through the Hall sensor 561, whether the electronic device 200 is in the folded state or the unfolded state. In an embodiment, the memory (e.g., the memory 130 of FIG. 1) may previously store measured values representing changes in the magnetic field according to the distance between the Hall sensor 561 and the magnet 520. In an embodiment, when the electronic device 200 transitions from the unfolded state to the folded state, the Hall sensor 561 disposed at the distal end of the first housing 210 may move away from the magnet 520 fixed to the hinge housing 310. In such a case, the magnetic field value of the magnet 520 detected by the Hall sensor 561 may decrease. The processor may detect that the electronic device 200 transitions from the unfolded state to the folded state by identifying that the magnetic field value detected by the Hall sensor 561 reaches a predetermined value. For example, the processor may detect that the electronic device 200 transitions from the unfolded state to the folded state by identifying that the magnetic field value detected by the Hall sensor 561 reaches a value stored in the memory. In contrast, when the electronic device 200 transitions from the folded state to the unfolded state, the Hall sensor 561 may approach the magnet 520. In such a case, the magnetic field value detected by the Hall sensor 561 may increase. The processor may detect that the electronic device 200 transitions from the folded state to the unfolded state by identifying that the magnetic field value of the magnet 520 detected by the Hall sensor 561 reaches a predetermined value. For example, the processor may detect that the electronic device 200 transitions from the folded state to the unfolded state by identifying that the magnetic field value detected by the Hall sensor 561 reaches a value stored in the memory. In addition, the Hall sensor 561 may be used to identify whether the electronic device 200 is folded or unfolded in various ways.

According to an embodiment, as illustrated in FIG. 9A, when the electronic device 200 transitions from the unfolded state to the folded state, a time-sequential configuration for controlling a motor connected to the hinge devices 400 and 400-1 may be configured as follows. In an embodiment, a user may apply a physical force to transition the electronic device 200 from the unfolded state to the folded state. Referring to FIGS. 8 and 9A, as the first housing 210 and the second housing 220 approach each other to face one another, the Hall sensor 561 and the magnet 520 may move away from each other. In such a case, the magnetic field value of the magnet 520 detected by the Hall sensor 561 may decrease. The Hall sensor 561 may generate a first signal based on the detected magnetic field value. The processor may identify whether the first signal reaches a predetermined value. For example, the memory may previously store representing measured values of changes in the magnetic field according to the distance between the Hall sensor 561 and the magnet 520. The Hall sensor 561 may generate the first signal based on the detected magnetic field value. Thereafter, the processor may identify that the first signal generated by the Hall sensor 561 reaches the predetermined value and may identify, through the angle sensor, a first folding angle between the first housing 210 and the second housing 220 at a time point when the first signal is generated. In addition, the processor may identify, through the angle sensor, a change in folding angle between the first housing 210 and the second housing 220 from the time point when the first signal is generated by the Hall sensor 561. For example, the processor may identify a second folding angle between the first housing 210 and the second housing 220, measured by the angle sensor after the time point when the first signal is generated by the Hall sensor 561. The processor may control the motor upon identifying that the second folding angle is decreased by a predetermined angle relative to the first folding angle. For example, the processor may identify that the second folding angle is decreased by a predetermined value stored in the memory relative to the first folding angle. Thereafter, based on the identified second folding angle, the processor may control the motor to fold the electronic device 200. For example, the processor may control the motor such that the electronic device 200 is folded upon identifying that the second folding angle is decreased by 3 degrees relative to the first folding angle. Thereafter, the processor may stop operation of the motor upon identifying, through the angle sensor, that the folding angle between the first housing 210 and the second housing 220 reaches a predetermined angle. For example, the processor may control the motor to stop upon identifying that the folding angle is 0 degrees. Thereafter, the processor may initialize the values input to the first pressure sensor 531, the angle sensor, and the motor for a subsequent operation (e.g., recognizing an unfolding operation).

According to an embodiment, a time-sequential configuration for controlling the motor connected to the hinge devices 400 and 400-1 when the electronic device 200 transitions from the unfolded state to the folded state may be implemented as illustrated in FIG. 9B. In an embodiment, the processor may identify whether the folding angle between the first housing 210 and the second housing 220, as measured by the angle sensor, reaches a predetermined angle. For example, the processor may compare the folding angle identified through the angle sensor with folding angle information stored in the memory. The processor may detect a second signal generated by the Hall sensor 561 after the folding angle reaches a predetermined angle. For example, the processor may detect the second signal generated by the Hall sensor 561 after identifying that the folding angle measured by the angle sensor corresponds to about 25 degrees. The processor may identify whether the second signal reaches a predetermined value, and may control the motor to fold the electronic device 200 from the time point when the second signal is detected. Thereafter, the processor may stop the operation of the motor upon identifying, through the angle sensor, that the folding angle between the first housing 210 and the second housing 220 reaches a predetermined value. For example, the processor may control the motor to stop upon identifying that the folding angle is 0 degrees. Thereafter, the processor may initialize values input to the first pressure sensor 531, the angle sensor, and the motor for a subsequent operation (e.g., an unfolding operation).

According to an embodiment, as illustrated in FIG. 10A, when the electronic device 200 transitions from the folded state to the unfolded state, a time-sequential configuration for controlling a motor connected to the hinge devices 400 and 400-1 may be configured as follows. In an embodiment, a user may transition the electronic device 200 from the folded state to the unfolded state. Referring to FIGS. 8 and 10A, as the first housing 210 and the second housing 220 are unfolded, the Hall sensor 561 and the magnet 520 may approach each other. In such a case, the magnetic field value of the magnet 520 detected by the Hall sensor 561 may increase. The Hall sensor 561 may generate a third signal based on the detected magnetic field value. The processor may identify whether the third signal reaches a predetermined value. For example, the memory may previously store representing measured values of changes in the magnetic field according to the distance between the Hall sensor 561 and the magnet 520. The Hall sensor 561 may generate a third signal based on the detected magnetic field value. Thereafter, the processor may identify that the third signal generated by the Hall sensor 561 reaches the predetermined value and may identify, through the angle sensor, a third folding angle between the first housing 210 and the second housing 220 at a time point when the third signal is generated. In addition, the processor may identify, through the angle sensor, a change in folding angle between the first housing 210 and the second housing 220 from the time point when the third signal is generated by the Hall sensor 561. For example, the processor may identify a fourth folding angle between the first housing 210 and the second housing 220, measured by the angle sensor after the time point when the third signal is generated by the Hall sensor 561. The processor may control the motor upon identifying that the fourth folding angle is increased by a predetermined angle relative to the third folding angle. For example, the processor may identify whether the fourth folding angle is increased by a predetermined value (e.g., an increase of 3 degrees) relative to the third folding angle stored in the memory, or whether the fourth folding angle reaches a predetermined angle (e.g., 155 degrees). Thereafter, the processor may control the motor based on the identified fourth folding angle. The processor may stop the operation of the motor upon identifying, through the angle sensor, that the folding angle between the first housing 210 and the second housing 220 reaches a predetermined value. For example, the processor may control the motor to stop upon identifying that the folding angle is 180 degrees. Thereafter, the processor may initialize the values input to the first pressure sensor 531, the angle sensor, and the motor for a subsequent operation. The angle at which the processor stops the motor is merely an example, and the motor may be stopped at various angles depending on various configurations.

According to an embodiment, a time-sequential configuration for controlling the motor connected to the hinge devices 400 and 400-1 when the electronic device 200 transitions from the folded state to the unfolded state may be implemented as illustrated in FIG. 10B. In an embodiment, the processor may identify whether the folding angle between the first housing 210 and the second housing 220, as measured by the angle sensor, reaches a predetermined angle. For example, the processor may compare the folding angle identified through the angle sensor with folding angle information stored in the memory. The processor may detect a fourth signal generated by the Hall sensor 561 after the folding angle reaches a predetermined angle. For example, the processor may detect the fourth signal generated by the Hall sensor 561 after identifying that the folding angle measured by the angle sensor corresponds to about 155 degrees. The processor may identify whether the fourth signal reaches a predetermined value, and may control the motor to unfold the electronic device 200 from the time point when the fourth signal is detected. Thereafter, the processor may stop the operation of the motor upon identifying, through the angle sensor, that the folding angle between the first housing 210 and the second housing 220 reaches a predetermined value. For example, the processor may control the motor to stop upon identifying that the folding angle is 180 degrees. Thereafter, the processor may initialize the values input to the first pressure sensor 531, the angle sensor, and the motor for a subsequent operation.

The specific angles presented in the above description are merely exemplary, and the processor may control the motor to fold or unfold the electronic device 200 at various angles that are implementable by a person ordinarily skilled in the art. In addition, a free-stop operation may be implemented in sections where the motor is not operating, so that the folding angle may vary according to a user's manipulation. Furthermore, although the description provided with reference to FIGS. 5A to 10B indicates that the motor is controlled by the processor only within a certain range of folding angles, the present is not necessarily limited thereto. For example, the processor may control the motor to open or close the electronic device 200 at a folding angle ranging from about 0 degrees to about 180 degrees.

In addition, although it has been described above that operations are performed by comparing values measured by the first pressure sensor, the second pressure sensor, the angle sensor, and/or the Hall sensor with values stored in the memory, the disclosure is not necessarily limited thereto. The above description is merely an example, and the electronic device 200 may be opened or closed through various methods. For example, the processor may control the motor to open or close the electronic device 200 after identifying, through a circuit configuration (e.g., a separate sensor) connected to each sensor (e.g., the first pressure sensor, the second pressure sensor, the angle sensor, and/or the Hall sensor), whether a predetermined value is reached.

In an embodiment disclosed herein, a motor may be connected to the hinge devices 400 and 400-1 so as to open or close the electronic device 200 in a relatively simple manner. In addition, a user's action to open or close the foldable electronic device may be identified through the pressure sensors 531 and 532 arranged in the electronic device 200. In an embodiment, the pressure sensors 531 and 532 may be sensitive to changes in pressure generated as the magnetic members 510 and 520 are pressed. Accordingly, when a user attempts to open or close the electronic device 200, the pressure sensors 531 and 532 may recognize a change in pressure applied through the magnetic members 510 and 520. In an embodiment, when an opening or closing operation of the electronic device 200 is identified through the pressure sensors, the folding operation of the electronic device 200 may be controlled by the motor. Therefore, the motor may assist in opening or closing the electronic device 200. For example, as the electronic device 200 transitions from the closed state to the unfolded state by the motor in a certain section, the electronic device 200 may be unfolded at once without a free-stop operation, so that damage to the hinge devices 400 and 400-1 may be prevented. In addition, as the electronic device 200 transitions from the unfolded state to the closed state by the motor in a certain section, the electronic device 200 may not be closed at once without a free-stop operation.

According to an embodiment of the disclosure, an electronic device 200 (e.g., the electronic device 101 in FIG. 1) may include a first housing 210, a second housing 220, a hinge device 400 or 400-1 configured to foldably connect the first housing and the second housing, the hinge device including a plurality of gears configured to rotate in engagement with each other, a driving device configured to rotate one gear among the plurality of gears, a display 230 disposed on the front surface of the electronic device and having a partial area of the display deformed by rotation of the second housing relative to the first housing, a first magnetic member 510 disposed in the first housing, a second magnetic member 520 disposed in the second housing to face the first magnetic member when the electronic device is in a folded state, a first pressure sensor 531 disposed between the display and the first magnetic member, and a processor 120 electrically connected to the first pressure sensor and the driving device. The first magnetic member may be configured to press the first pressure sensor by an attractive force acting between the first magnetic member and the second magnetic member in response to a folding operation of the first housing and the second housing. The first pressure sensor may be configured to generate a pressure signal based on the pressing by the first magnetic member. The processor may be configured to control the driving device based on the pressure signal.

The electronic device may further include an angle sensor electrically connected to the processor. The processor may be configured to identify whether a first pressure signal generated by the first pressure sensor based on pressing by the first magnetic member reaches a predetermined value, identify a first folding angle between the first housing and the second housing, the first folding angle being measured by the angle sensor at a time point when the first pressure signal is generated, identify a second folding angle between the first housing and the second housing, the second folding angle being measured by the angle sensor after the time point when the first pressure signal is generated, identify whether the identified second folding angle is decreased by a predetermined value relative to the first folding angle, control the driving device to fold the electronic device based on the identified second folding angle, and stop operation of the driving device upon identifying, through the angle sensor, that a folding angle between the first housing and the second housing reaches a predetermined angle.

The electronic device may further include an angle sensor electrically connected to the processor. The processor may be configured to identify, through the angle sensor, that the folding angle between the first housing and the second housing reaches a predetermined angle, after the folding angle reaches the predetermined angle, detect a second pressure signal generated by the first pressure sensor based on pressing by the first magnetic member, identify whether the second pressure signal reaches a predetermined value, control the driving device to fold the electronic device based on the identified second pressure signal, identify, through the angle sensor, that the folding angle between the first housing and the second housing reaches a predetermined angle, and stop operation of the driving device.

The electronic device may further include an angle sensor electrically connected to the processor. The processor may be configured to identify whether a third pressure signal generated by the first pressure sensor based on pressing by the first magnetic member reaches a predetermined value, identify a third folding angle between the first housing and the second housing, the third folding angle being measured by the angle sensor at a time point when the third pressure signal is generated, identify a fourth folding angle between the first housing and the second housing, the fourth folding angle being measured by the angle sensor after the time point when the third pressure signal is generated, identify whether the identified fourth folding angle is increased by a predetermined value relative to the third folding angle, control the driving device to unfold the electronic device based on the identified fourth folding angle, and stop operation of the driving device upon identifying, through the angle sensor, that a folding angle between the first housing and the second housing reaches a predetermined angle.

The electronic device may further include an angle sensor electrically connected to the processor. The processor may be configured to identify, through the angle sensor, that the folding angle between the first housing and the second housing reaches a predetermined angle, after the folding angle reaches the predetermined angle, detect a fourth pressure signal generated by the first pressure sensor based on pressing by the first magnetic member, identify whether the fourth pressure signal reaches a predetermined value, control the driving device to unfold the electronic device based on the identified fourth pressure signal, identify, through the angle sensor, that the folding angle between the first housing and the second housing reaches a predetermined angle, and stop operation of the driving device.

One of the first magnetic member and the second magnetic member may be a metal plate formed of a metallic material, and the remaining one of the first magnetic member and the second magnetic member may be a magnet.

The magnet may have different polarities that are alternately arranged.

The electronic device may further include a first seating portion 551 in which the first magnetic member is seated, and a first elastic member 541 disposed in at least one of a space between the first magnetic member and the first pressure sensor, and a space between the first magnetic member and the first seating portion.

The electronic device may further include a second pressure sensor 532 disposed between the display and the second magnetic member. The second magnetic member may be configured to press the second pressure sensor by an attractive force acting between the first magnetic member and the second magnetic member in response to the folding operation of the first housing and the second housing. The second pressure sensor may be configured to generate a pressure signal based on pressing by the second magnetic member. The processor may be configured to control the driving device based on either the pressure signal generated by the first pressure sensor or the pressure signal generated by the second pressure sensor.

The electronic device may further include an angle sensor electrically connected to the processor. The processor may be configured to detect one pressure signal from among a pressure signal generated by the first pressure sensor and a pressure signal generated by the second pressure sensor, identify whether the detected one pressure signal reaches a predetermined value, identify a first folding angle between the first housing and the second housing, the first folding angle being measured by the angle sensor at a time point when the one pressure signal is generated, identify a second folding angle between the first housing and the second housing, the second folding angle being measured by the angle sensor after the time point when the one pressure signal is generated, identify whether the identified second folding angle is decreased by a predetermined value relative to the first folding angle, control the driving device to fold the electronic device based on the identified second folding angle, and stop operation of the driving device upon identifying, through the angle sensor, that a folding angle between the first housing and the second housing reaches a predetermined angle.

The electronic device may further include an angle sensor electrically connected to the processor. The processor may be configured to identify, through the angle sensor, that the folding angle between the first housing and the second housing reaches a predetermined angle, after the folding angle reaches the predetermined angle, detect one pressure signal from among a pressure signal generated by the first pressure sensor based on pressing by the first magnetic member, and a pressure signal generated by the second pressure sensor based on pressing by the second magnetic member, identify whether the detected one pressure signal reaches a predetermined value, control the driving device to fold the electronic device based on the identified one pressure signal, identify, through the angle sensor, that the folding angle between the first housing and the second housing reaches a predetermined angle, and stop operation of the driving device.

The electronic device may further include an angle sensor electrically connected to the processor. The processor may be configured to detect one pressure signal from among a pressure signal generated by the first pressure sensor and a pressure signal generated by the second pressure sensor, identify whether the detected one pressure signal reaches a predetermined value, identify a third folding angle between the first housing and the second housing, the third folding angle being measured by the angle sensor at a time point when the one pressure signal is generated, identify a fourth folding angle between the first housing and the second housing, the fourth folding angle being measured by the angle sensor after the time point when the one pressure signal is generated, identify whether the identified fourth folding angle is increased by a predetermined value relative to the third folding angle, control the driving device to unfold the electronic device based on the identified fourth folding angle, and stop operation of the driving device upon identifying, through the angle sensor, that a folding angle between the first housing and the second housing reaches a predetermined angle.

The electronic device may further include an angle sensor electrically connected to the processor. The processor may be configured to identify, through the angle sensor, that the folding angle between the first housing and the second housing reaches a predetermined angle, after the folding angle reaches the predetermined angle, detect one pressure signal from among a pressure signal generated by the first pressure sensor based on pressing by the first magnetic member, and a pressure signal generated by the second pressure sensor based on pressing by the second magnetic member, identify whether the detected one pressure signal reaches a predetermined value, control the driving device to fold the electronic device based on the identified one pressure signal, identify, through the angle sensor, that the folding angle between the first housing and the second housing reaches a predetermined angle, and stop operation of the driving device.

The processor may be configured to control the driving device based on a pressure signal that is first generated between the pressure signal generated by the first pressure sensor and the pressure signal generated by the second pressure sensor.

The processor may be configured to control the driving device based on a pressure signal that is last generated between the pressure signal generated by the first pressure sensor and the pressure signal generated by the second pressure sensor.

According to an embodiment of the disclosure, an electronic device 200 9( e.g., the electronic device 101) may include a first housing 210, a second housing 220, a hinge device 400 or 400-1 configured to foldably connect the first housing and the second housing, the hinge device including a plurality of gears configured to rotate in engagement with each other, a driving device configured to rotate one gear among the plurality of gears, a magnet 520 disposed in the hinge device, a Hall sensor 561 disposed in one of the first housing and the second housing, the hall sensor facing the magnet when the electronic device is in an unfolded state, and a processor 120 electrically connected to the Hall sensor and the driving device.

The processor may be configured to detect a magnetic field value of the magnet through the Hall sensor, and control the driving device based on the detected magnetic field value.

The electronic device may further include an angle sensor electrically connected to the processor. The Hall sensor may be configured to move away from the magnet as the electronic device transitions from an unfolded state to a folded state, detect the magnetic field value of the magnet, and generate a first signal based on the detected magnetic field value. The processor may be configured to identify whether the first signal generated by the Hall sensor reaches a predetermined value, identify a first folding angle between the first housing and the second housing, the first folding angle being measured by the angle sensor at a time point when the first signal is generated by the Hall sensor, identify a second folding angle between the first housing and the second housing, the second folding angle being measured by the angle sensor after the time point when the first signal is generated, identify whether the identified second folding angle is decreased by a predetermined value relative to the first folding angle, control the driving device to fold the electronic device based on the identified second folding angle, and stop operation of the driving device upon identifying, through the angle sensor, that a folding angle between the first housing and the second housing reaches a predetermined angle.

The electronic device may further include an angle sensor electrically connected to the processor. The Hall sensor may be configured to move away from the magnet as the electronic device transitions from an unfolded state to a folded state. The processor may be configured to identify, through the angle sensor, that a folding angle between the first housing and the second housing reaches a predetermined angle, after the folding angle reaches the predetermined angle, detect a second signal generated by the Hall sensor, identify whether the second signal reaches a predetermined value, control the driving device to fold the electronic device based on the identified second signal, identify, through the angle sensor, that the folding angle between the first housing and the second housing reaches the predetermined angle, and stop operation of the driving device.

The electronic device may further include an angle sensor electrically connected to the processor. The Hall sensor may be configured to approach the magnet as the electronic device transitions from a folded state to an unfolded state, detect a magnetic field value of the magnet, and generate a third signal based on the detected magnetic field value. The processor may be configured to identify whether the third signal generated by the Hall sensor reaches a predetermined value, identify a third folding angle between the first housing and the second housing, the third folding angle being measured by the angle sensor at a time point when the third signal is generated by the Hall sensor, identify a fourth folding angle between the first housing and the second housing, the fourth folding angle being measured by the angle sensor after the time point when the third signal is generated, identify whether the fourth folding angle is increased by a predetermined value relative to the third folding angle, control the driving device to unfold the electronic device based on the identified fourth folding angle, and stop operation of the driving device upon identifying, through the angle sensor, that the folding angle between the first housing and the second housing reaches the predetermined angle.

The electronic device may further include an angle sensor electrically connected to the processor. The Hall sensor may be configured to approach the magnet as the electronic device transitions from a folded state to an unfolded state. The processor may be configured to identify, through the angle sensor, that a folding angle between the first housing and the second housing reaches a predetermined angle, after the folding angle reaches the predetermined angle, detect a fourth signal generated by the Hall sensor, identify whether the fourth signal reaches a predetermined value, control the driving device to unfold the electronic device based on the identified fourth signal, identify, through the angle sensor, that the folding angle between the first housing and the second housing reaches the predetermined angle, and stop operation of the driving device.

## Claims

1. An electronic device (101, 200) comprising:
a first housing (210);
a second housing (220);
a hinge device (400, 400-1) configured to foldably connect the first housing and the second housing, the hinge device comprising a plurality of gears configured to rotate in engagement with each other;
a driving device configured to rotate one gear among the plurality of gears;
a display (230) disposed on a front surface of the electronic device in which a partial area is deformed by rotation of the second housing relative to the first housing;
a first magnetic member (510) disposed in the first housing;
a second magnetic member (520) disposed in the second housing to face the first magnetic member when the electronic device is in a folded state;
a first pressure sensor (531) disposed between the display and the first magnetic member; and
a processor (120) electrically connected to the first pressure sensor and the driving device,
wherein the first magnetic member is configured to press the first pressure sensor by an attractive force acting between the first magnetic member and the second magnetic member in response to a folding operation of the first housing and the second housing,
wherein the first pressure sensor is configured to generate a pressure signal based on the pressing by the first magnetic member, and
wherein the processor is configured to control the driving device based on the pressure signal.

2. The electronic device of claim 1, further comprising:
an angle sensor electrically connected to the processor,
wherein the processor is configured to:
identify whether a first pressure signal generated by the first pressure sensor based on pressing by the first magnetic member reaches a predetermined value;
identify a first folding angle between the first housing and the second housing, the first folding angle being measured by the angle sensor at a time point when the first pressure signal is generated;
identify a second folding angle between the first housing and the second housing, the second folding angle being measured by the angle sensor after the time point when the first pressure signal is generated;
identify whether the identified second folding angle is decreased by a predetermined value relative to the first folding angle;
control the driving device to fold the electronic device based on the identified second folding angle; and
stop operation of the driving device upon identifying, through the angle sensor, that a folding angle between the first housing and the second housing reaches a predetermined angle.

3. The electronic device of claim 1, further comprising:
an angle sensor electrically connected to the processor,
wherein the processor is configured to:
identify, through the angle sensor, that the folding angle between the first housing and the second housing reaches a predetermined angle;
after the folding angle reaches the predetermined angle, detect a second pressure signal generated by the first pressure sensor based on pressing by the first magnetic member;
identify whether the second pressure signal reaches a predetermined value;
control the driving device to fold the electronic device based on the identified second pressure signal;
identify, through the angle sensor, that the folding angle between the first housing and the second housing reaches a predetermined angle; and
stop operation of the driving device.

4. The electronic device of claim 1, further comprising:
an angle sensor electrically connected to the processor,
wherein the processor is configured to:
identify whether a third pressure signal generated by the first pressure sensor based on pressing by the first magnetic member reaches a predetermined value;
identify a third folding angle between the first housing and the second housing, the third folding angle being measured by the angle sensor at a time point when the third pressure signal is generated;
identify a fourth folding angle between the first housing and the second housing, the fourth folding angle being measured by the angle sensor after the time point when the third pressure signal is generated;
identify whether the identified fourth folding angle is increased by a predetermined value relative to the third folding angle;
control the driving device to unfold the electronic device based on the identified fourth folding angle; and
stop operation of the driving device upon identifying, through the angle sensor, that a folding angle between the first housing and the second housing reaches a predetermined angle.

5. The electronic device of claim 1, further comprising:
an angle sensor electrically connected to the processor,
wherein the processor is configured to:
identify, through the angle sensor, that the folding angle between the first housing and the second housing reaches a predetermined angle;
after the folding angle reaches the predetermined angle, detect a fourth pressure signal generated by the first pressure sensor based on pressing by the first magnetic member;
identify whether the fourth pressure signal reaches a predetermined value;
control the driving device to unfold the electronic device based on the identified fourth pressure signal;
identify, through the angle sensor, that the folding angle between the first housing and the second housing reaches a predetermined angle; and
stop operation of the driving device.

6. The electronic device of claim 1, further comprising:
a first seating portion (551) in which the first magnetic member is seated; and
a first elastic member (541) disposed in at least one of a space between the first magnetic member and the first pressure sensor, and a space between the first magnetic member and the first seating portion.

7. The electronic device of claim 1, further comprising:
a second pressure sensor (532) disposed between the display and the second magnetic member,
wherein the second magnetic member is configured to press the second pressure sensor by an attractive force acting between the first magnetic member and the second magnetic member in response to the folding operation of the first housing and the second housing,
wherein the second pressure sensor is configured to generate a pressure signal based on pressing by the second magnetic member, and
wherein the processor is configured to control the driving device based on either the pressure signal generated by the first pressure sensor or the pressure signal generated by the second pressure sensor.

8. The electronic device of claim 7, further comprising:
an angle sensor electrically connected to the processor,
wherein the processor is configured to:
detect one pressure signal from among a pressure signal generated by the first pressure sensor and a pressure signal generated by the second pressure sensor;
identify whether the detected one pressure signal reaches a predetermined value;
identify a first folding angle between the first housing and the second housing, the first folding angle being measured by the angle sensor at a time point when the one pressure signal is generated;
identify a second folding angle between the first housing and the second housing, the second folding angle being measured by the angle sensor after the time point when the one pressure signal is generated;
identify whether the identified second folding angle is decreased by a predetermined value relative to the first folding angle;
control the driving device to fold the electronic device based on the identified second folding angle; and
stop operation of the driving device upon identifying, through the angle sensor, that a folding angle between the first housing and the second housing reaches a predetermined angle.

9. The electronic device of claim 7, further comprising:
an angle sensor electrically connected to the processor,
wherein the processor is configured to:
identify, through the angle sensor, that the folding angle between the first housing and the second housing reaches a predetermined angle;
after the folding angle reaches the predetermined angle, detect one pressure signal from among a pressure signal generated by the first pressure sensor based on pressing by the first magnetic member, and a pressure signal generated by the second pressure sensor based on pressing by the second magnetic member;
identify whether the detected one pressure signal reaches a predetermined value;
control the driving device to fold the electronic device based on the identified one pressure signal;
identify, through the angle sensor, that the folding angle between the first housing and the second housing reaches a predetermined angle; and
stop operation of the driving device.

10. The electronic device of claim 7, further comprising:
an angle sensor electrically connected to the processor,
wherein the processor is configured to:
detect one pressure signal from among a pressure signal generated by the first pressure sensor and a pressure signal generated by the second pressure sensor;
identify whether the detected one pressure signal reaches a predetermined value;
identify a third folding angle between the first housing and the second housing, the third folding angle being measured by the angle sensor at a time point when the one pressure signal is generated;
identify a fourth folding angle between the first housing and the second housing, the fourth folding angle being measured by the angle sensor after the time point when the one pressure signal is generated;
identify whether the identified fourth folding angle is increased by a predetermined value relative to the third folding angle;
control the driving device to unfold the electronic device based on the identified fourth folding angle; and
stop operation of the driving device upon identifying, through the angle sensor, that a folding angle between the first housing and the second housing reaches a predetermined angle.

11. The electronic device of claim 7, further comprising:
an angle sensor electrically connected to the processor,
wherein the processor is configured to:
identify, through the angle sensor, that the folding angle between the first housing and the second housing reaches a predetermined angle; and
after the folding angle reaches the predetermined angle, detect one pressure signal from among a pressure signal generated by the first pressure sensor based on pressing by the first magnetic member, and a pressure signal generated by the second pressure sensor based on pressing by the second magnetic member;
identify whether the detected one pressure signal reaches a predetermined value;
control the driving device to fold the electronic device based on the identified one pressure signal;
identify, through the angle sensor, that the folding angle between the first housing and the second housing reaches a predetermined angle; and
stop operation of the driving device.

12. The electronic device of claim 7, wherein the processor is configured to:
control the driving device based on a pressure signal that is first generated between the pressure signal generated by the first pressure sensor and the pressure signal generated by the second pressure sensor.

13. The electronic device of claim 7, wherein the processor is configured to:
control the driving device based on a pressure signal that is last generated between the pressure signal generated by the first pressure sensor and the pressure signal generated by the second pressure sensor.

14. An electronic device (101, 200) comprising:
a first housing (210);
a second housing (220);
a hinge device (400, 400-1) configured to foldably connect the first housing and the second housing, the hinge device comprising a plurality of gears configured to rotate in engagement with each other;
a driving device configured to rotate one gear among the plurality of gears;
a magnet (520) disposed in the hinge device;
a Hall sensor (561) disposed in one of the first housing and the second housing, the hall sensor facing the magnet when the electronic device is in an unfolded state; and
a processor (120) electrically connected to the Hall sensor and the driving device,
wherein the processor is configured to:
detect a magnetic field value of the magnet through the Hall sensor; and
control the driving device based on the detected magnetic field value.

15. The electronic device of claim 14, further comprising:
an angle sensor electrically connected to the processor,
wherein the Hall sensor is configured to:
move away from the magnet as the electronic device transitions from an unfolded state to a folded state;
detect the magnetic field value of the magnet; and
generate a first signal based on the detected magnetic field value, and
wherein the processor is configured to:
identify whether the first signal generated by the Hall sensor reaches a predetermined value;
identify a first folding angle between the first housing and the second housing, the first folding angle being measured by the angle sensor at a time point when the first signal is generated Hall sensor;
identify a second folding angle between the first housing and the second housing, the second folding angle being measured by the angle sensor after the time point when the first signal is generated;
identify whether the identified second folding angle is decreased by a predetermined value relative to the first folding angle;
control the driving device to fold the electronic device based on the identified second folding angle; and
stop operation of the driving device upon identifying, through the angle sensor, that a folding angle between the first housing and the second housing reaches a predetermined angle.
